# EUROPEAN PATENT APPLICATION

(11) **EP 4 797 088 A1**
(43) Date of publication of application: **26.08.2026**
(21) Application number: 24879441.4
(22) Date of filing: 29.08.2024
(51) Int. Cl.: G06F 9/445, B60R 16/02, B60R 16/023, H04L 12/28

(54) **IN-VEHICLE NETWORK SYSTEM, MANAGEMENT DEVICE, STORAGE MEDIUM, AND TARGET DEVICE STARTUP METHOD**

(30) Priority: 20.10.2023 JP 2023181245
(71) Applicant: TOYOTA JIDOSHA KABUSHIKI KAISHA, Toyota-Shi, Aichi-Ken 471-8571 (JP)
(72) Inventor: TAKAISHI Daisuke, Toyota-shi, Aichi 471-8571 (JP); TOMIDA Shingo, Toyota-shi, Aichi 471-8571 (JP); SUGIYAMA Kazuya, Toyota-shi, Aichi 471-8571 (JP); ANDOU Hiroya, Toyota-shi, Aichi 471-8571 (JP)
(74) Representative: J A Kemp LLP
(86) International application number: PCT/JP2024/030903
(87) International publication number: WO 2025/084013

(57) **Abstract**

An in-vehicle network system (100) includes a management device (10) and target devices communicably connected to the management device (10) and started by the management device (10). In the in-vehicle network system (100), the management device (10) selects a startup method for starting at least one target device from a first startup method and a second startup method. In the first startup method, the management device (10) starts the at least one target device through power control that controls whether to supply power to the at least one target device. In the second startup method, the management device (10) starts the at least one target device by requesting startup of the at least one target device via communication. The management device (10) starts the at least one target device using the selected startup method.

## Description

### TECHNICAL FIELD

The present disclosure relates to an in-vehicle network system, a management device, a storage medium, and a target device startup method.

### BACKGROUND ART

Patent Literature 1 discloses a power control system. The power control system includes a management device and a target device that is started by the management device. The management device starts the target device through power control.

Patent Literature 2 discloses an in-vehicle network system. In the in-vehicle network system, the management device starts a target device by sending a startup request to the target device via communication.

### CITATION LIST

Patent Literature
Patent Literature 1: JP2017-33321A
Patent Literature 2: JP2021-11228A

### SUMMARY OF INVENTION

### Technical Problem

In Patent Literature 2, a target device is started using a communication-based startup method instead of a power-control-based startup method. This eliminates the need for a power control line used for power control. Accordingly, there remains room for improvement in terms of using both the power-control-based startup method and the communication-based startup method.

### Solution to Problem

A first aspect of the present disclosure provides an in-vehicle network system that includes a management device and target devices communicably connected to the management device and started by the management device. The management device selects a startup method for starting at least one target device of the target devices from a first startup method and a second startup method. In the first startup method, the management device starts the at least one target device through power control that controls whether to supply power to the at least one target device. In the second method, the management device starts the at least one target device by requesting, from the management device, startup of the at least one target device via communication. In the in-vehicle network system, the management device is configured to start the at least one target device using the selected startup method.

A second aspect of the present disclosure provides a management device for starting target devices communicably connected to each other. The management device selects a startup method for starting at least one target device of the target devices from a first startup method and a second startup method. In the first startup method, the management device starts the at least one target device through power control that controls whether to supply power to the at least one target device. In the second startup method, the management device starts the at least one target device by requesting startup of the at least one target device via communication. The management device is configured to start the at least one target device using the selected startup method.

A third aspect of the present disclosure provides a non-transitory computer-readable storage medium storing a target device startup program in an in-vehicle network system. The in-vehicle network system includes a management device and target devices communicably connected to the management device and started by the management device. The target device startup program causes the management device to select a startup method for starting at least one target device of the target devices from a first startup method and a second startup method. In the first startup method, the management device starts the at least one target device through power control that controls whether to supply power to the at least one target device. In the second startup method, the management device starts the at least one target device by requesting, from the management device, startup of the at least one target device via communication. The target device startup program causes the management device to start the at least one target device using the selected startup method.

A fourth aspect of the present disclosure provides a target device startup method for an in-vehicle network system. The in-vehicle network system includes a management device and target devices communicably connected to the management device and started by the management device. The target device startup method includes a first step of selecting, by the management device, a startup method for starting at least one target device of the target devices from a first startup method and a second startup method.. In the first startup method, the management device starts the at least one target device through power control that controls whether to supply power to the at least one target device. In the second startup method, the management device starts the at least one target device by requesting, from the management device, startup of the at least one target device via communication. The target device startup method includes a second step of starting, by the management device, the at least one target device using the startup method selected in the first step.

Each of the aspects allows for the use of both the first startup method, which is a power-control-based startup method, and the second startup method, which is a communication-based startup method.

### BRIEF DESCRIPTION OF DRAWINGS

[Fig. 1] Fig. 1 is a schematic diagram illustrating the configuration of an in-vehicle network system according to a first embodiment.
[Fig. 2] Fig. 2 is a schematic diagram illustrating the configuration of the management device in the in-vehicle network system of the embodiment.
[Fig. 3] Fig. 3 is a schematic diagram illustrating the configuration of a mid-level ECU, a first gateway, a second gateway, and a lower-level ECU in the in-vehicle network system of the embodiment.
[Fig. 4] Fig. 4 is a flowchart illustrating processes related to selection of a target device startup method executed by the management device.
[Fig. 5] Fig. 5 is a table listing the contents of a first database stored in the management device.
[Fig. 6] Fig. 6 is a table listing the contents of a second database stored in the management device.
[Fig. 7] Fig. 7 is a flowchart illustrating a procedure for creating the second database stored in the management device.
[Fig. 8] Fig. 8 is a flowchart illustrating processes related to startup of a target device executed by the management device.
[Fig. 9] Fig. 9 is a flowchart illustrating processes related to operation continuation of a target device executed by the management device.
[Fig. 10] Fig. 10 is a schematic diagram illustrating a first example of how the management device starts the target devices.
[Fig. 11] Fig. 11 is a schematic diagram illustrating a second example of how the management device starts the target devices.
[Fig. 12] Fig. 12 is a schematic diagram illustrating a third example of how the management device starts the target devices.
[Fig. 13] Fig. 13 is a schematic diagram illustrating the configuration of the in-vehicle network system according to a first modification.
[Fig. 14] Fig. 14 is a table listing the contents of a database stored in the management device of the in-vehicle network system according to a second modification.
[Fig. 15] Fig. 15 is a flowchart illustrating processes related to selection of a target device startup method executed by the management device in the in-vehicle network system of the second modification.
[Fig. 16] Fig. 16 is a table listing the contents of a database stored in the management device of the in-vehicle network system according to a third modification.
[Fig. 17] Fig. 17 is a flowchart illustrating processes related to selection of a target device startup method executed by the management device in the in-vehicle network system of the third modification.
[Fig. 18] Fig. 18 is a flowchart illustrating processes related to selection of a target device startup method executed by the management device in the in-vehicle network system according to a fourth modification.
[Fig. 19] Fig. 19 is a table listing the contents of a database stored in the management device of the in-vehicle network system according to a fifth modification.
[Fig. 20] Fig. 20 is a flowchart illustrating processes related to selection of a target device startup method executed by the management device in the in-vehicle network system of the fifth modification.
[Fig. 21] Fig. 21 is a table listing the contents of a database stored in the management device of the in-vehicle network system according to a sixth modification.
[Fig. 22] Fig. 22 is a flowchart illustrating processes related to selection of a target device startup method executed by the management device in the in-vehicle network system of the sixth modification.
[Fig. 23] Fig. 23 is a table listing the contents of a database stored in the management device of the in-vehicle network system according to a seventh modification.
[Fig. 24] Fig. 24 is a flowchart illustrating processes related to selection of a target device startup method executed by the management device in the in-vehicle network system of the seventh modification.
[Fig. 25] Fig. 25 is a flowchart illustrating processes related to selection of a target device startup method executed by the management device in the in-vehicle network system according to an eighth modification.

### DESCRIPTION OF EMBODIMENTS

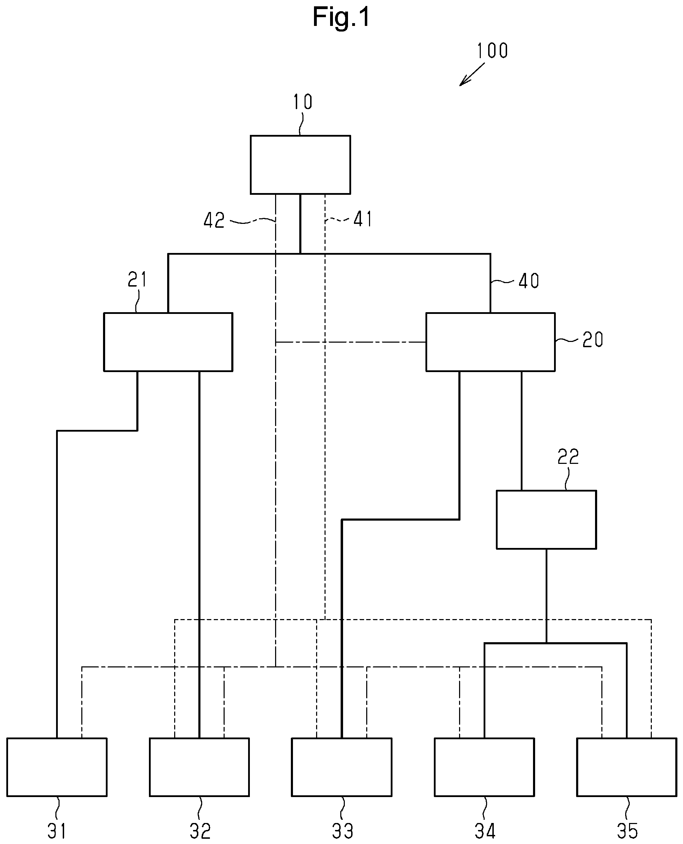

An embodiment of an in-vehicle network system will now be described with reference to Figs. 1 to 12.

### <Configuration of In-Vehicle Network System 100>

As shown in Fig. 1, the in-vehicle network system 100 includes electronic control units. In Fig. 1, each electronic control unit (ECU) is depicted as a rectangle. The electronic control units are communicably connected to each other by a communication line 40. Thus, the electronic control units form an in-vehicle network. Each electronic control unit is supplied with power from a power supply. The electronic control unit alternates between an active state, where processing can be performed, and a standby state, where operation is paused to reduce power consumption.

As shown in Fig. 1, one of the electronic control units that form the in-vehicle network is a management device 10. The management device 10 is communicably connected to other electronic control units of the in-vehicle network via a communication line 40. Specifically, the management device 10 is connected to a mid-level ECU 20 and a first gateway 21 by the communication line 40. The first gateway 21 is connected to a first lower-level ECU 31 by the communication line 40. The first gateway 21 is connected to a second lower-level ECU 32 by the communication line 40. The mid-level ECU 20 is connected to a third lower-level ECU 33 by the communication line 40. The mid-level ECU 20 is connected to a second gateway 22 by the communication line 40. The second gateway 22 is connected to a fourth lower-level ECU 34 and a fifth lower-level ECU 35 by the communication line 40.

As indicated by the broken line in Fig. 1, a first power control line 41 is connected to the management device 10. The first power control line 41 branches into three lines connected to the second lower-level ECU 32, the third lower-level ECU 33, and the fifth lower-level ECU 35. Accordingly, the second lower-level ECU 32 is directly connected to the management device 10 by the first power control line 41 without any other electronic control unit interposed between the second lower-level ECU 32 and the management device 10. Likewise, the third lower-level ECU 33 is directly connected to the management device 10 by the first power control line 41 without any other electronic control unit interposed between the third lower-level ECU 33 and the management device 10. Likewise, the fifth lower-level ECU 35 is directly connected to the management device 10 by the first power control line 41 without any other electronic control unit interposed between the fifth lower-level ECU 35 and the management device 10.

As indicated by the single-dashed line in Fig. 1, a second power control line 42 is connected to the management device 10. The second power control line 42 branches and connects to the mid-level ECU 20, the first lower-level ECU 31, the second lower-level ECU 32, the third lower-level ECU 33, the fourth lower-level ECU 34, and the fifth lower-level ECU 35. Thus, the mid-level ECU 20 is directly connected to the management device 10 by the second power control line 42 without any other electronic control unit interposed between the mid-level ECU 20 and the management device 10. Likewise, the first lower-level ECU 31 is directly connected to the management device 10 by the second power control line 42 without any other electronic control unit interposed between the first lower-level ECU 31 and the management device 10. Likewise, the second lower-level ECU 32 is directly connected to the management device 10 by the second power control line 42 without any other electronic control unit interposed between the second lower-level ECU 32 and the management device 10. Likewise, the third lower-level ECU 33 is directly connected to the management device 10 by the second power control line 42 without any other electronic control unit interposed between the third lower-level ECU 33 and the management device 10. Likewise, the fourth lower-level ECU 34 is directly connected to the management device 10 by the second power control line 42 without any other electronic control unit interposed between the fourth lower-level ECU 34 and the management device 10. Likewise, the fifth lower-level ECU 35 is directly connected to the management device 10 by the second power control line 42 without any other electronic control unit interposed between the fifth lower-level ECU 35 and the management device 10.

The number of communication lines and the number of power control lines included in the in-vehicle network system 100 are not limited to those in the present embodiment. That is, the in-vehicle network system 100 may include any number of communication lines and power control lines. The connection configuration of each electronic control unit, that is, the topology of the in-vehicle network, is not limited to the present embodiment.

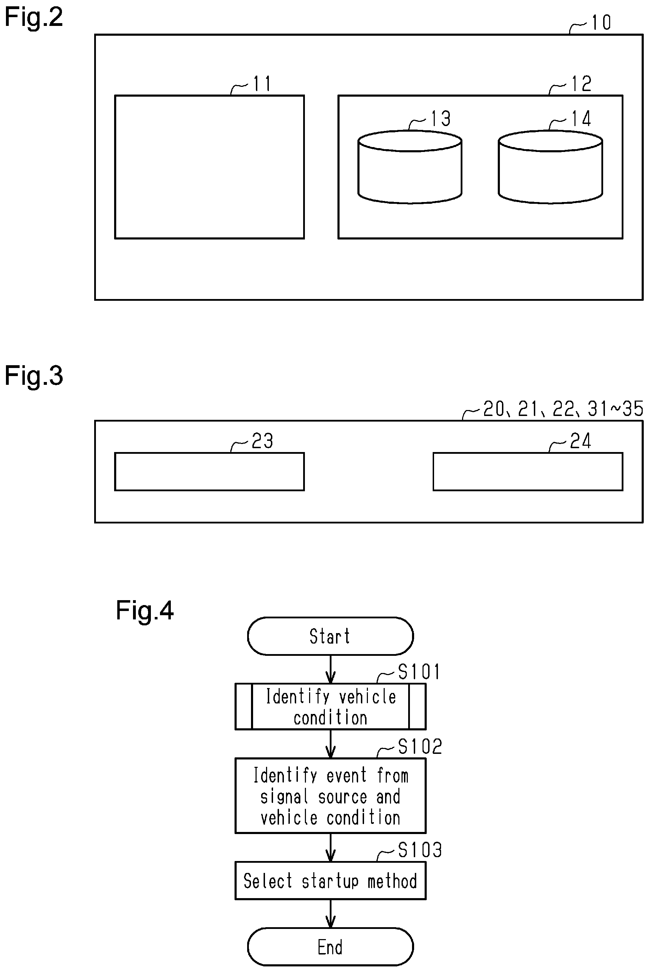

As shown in Fig. 2, the management device 10 includes a processing device 11 and a storage device 12. The storage device 12 stores programs. The programs stored in the storage device 12 include a startup program for an electronic control unit that controls startup of electronic control units in the in-vehicle network system 100. The storage device 12 corresponds to a non-transitory computer-readable storage medium that stores a startup program. The storage device 12 further stores a first database 13 and a second database 14. The first database 13 and the second database 14 will be described later. The processing device 11 executes various processes by running the programs stored in the storage device 12. The processing device 11 includes a processor.

Fig. 3 illustrates the configuration of electronic control units other than the management device 10. Specifically, Fig. 3 illustrates the configuration of the mid-level ECU 20, the first gateway 21, the second gateway 22, and the first lower-level ECU 31 to the fifth lower-level ECU 35. These electronic control units each include a processing device 23 and a storage device 24.

The storage device 24 stores programs. The processing device 23 executes various processes by running the programs stored in the storage device 24. The processing device 23 includes a processor.

The management device 10 sends a startup request signal to other electronic control units on the in-vehicle network, thereby starting those electronic control units. Hereinafter, an electronic control unit started by the management device 10 is referred to as a target device. The management device 10 selects and starts necessary target devices according to a function to be implemented. The management device 10 transitions each target device from a standby state to an active state by starting the target device. Multiple target devices started by the management device 10 communicate with each other to implement a specific function. The combination of target devices to be started varies depending on the function to be implemented.

In the in-vehicle network system 100, the mid-level ECU 20 and the first lower-level ECU 31 to the fifth lower-level ECU 35 are target devices. The management device 10 selects and starts, from these target devices, a target device corresponding to a function to be implemented each time.

The management device 10 receives a startup request signal from another electronic control unit connected through the communication line 40. The electronic control unit that transmits the startup request signal transmits information for identifying that unit to the management device 10 as part of the startup request signal.

In this manner, the management device 10 selects, when obtaining a startup request signal from another device, a startup method for a target device corresponding to the function to be implemented from the first and second startup methods. To start multiple target devices, the management device 10 selects a startup method for each target device. Then, the management device 10 starts each target device using the selected startup method.

To start a target device using the first startup method, the management device 10 starts multiple target devices through power control. Specifically, the management device 10 transmits a startup request signal to multiple target devices through the first power control line 41 or the second power control line 42. A target device that receives a startup request signal from the management device 10 via a power control line receives power from a power supply in response to the signal. As a result, the target device is started. When the management device 10 sends the startup request signal via the power control line, all target devices that have received the startup request signal are started. That is, all of the target devices directly connected to the management device 10 through the power control line are started. Accordingly, when the management device 10 transmits a startup request signal through the first power control line 41, the second lower-level ECU 32, the third lower-level ECU 33, and the fifth lower-level ECU 35 are started. When the management device 10 transmits a startup request signal through the second power control line 42, all of the lower-level ECUs (i.e., the first lower-level ECU 31 to the fifth lower-level ECU 35) and the mid-level ECU 20 are started. Thus, in the first startup method, the management device 10 controls whether to supply power to a target device by sending a startup request signal via a power control line.

As described above, each target device has a different function to be implemented. In the first startup method, the management device 10 starts all of the target devices connected to the power control line. Accordingly, when the management device 10 starts a target device using the first startup method, target devices that do not originally need to be started are also started together. That is, even a target device that is not related to a function to be implemented by the management device 10 is started by the management device 10 if the target device is connected to a power control line used to start a target device that implements the function. This causes the first startup method to consume unnecessary power.

To start a target device using the second startup method, the management device 10 sends, via the communication line 40, a message containing a startup request signal and identification information for the target device to which the signal is addressed. The message sent from the management device 10 reaches the target device directly or via an intermediate device.

In this manner, in the first startup method, the management device 10 uses either the first power control line 41 or the second power control line 42 without using the communication line 40. In the second startup method, the management device 10 uses the communication line 40 without using either the first power control line 41 or the second power control line 42.

An intermediate device is an electronic control unit that relays communication from the management device 10 through the communication line 40 to a target device. In the in-vehicle network system 100, the mid-level ECU 20, the first gateway 21, and the second gateway 22 function as intermediate devices.

The mid-level ECU 20 transmits a message received from the management device 10 to the third lower-level ECU 33 and the second gateway 22. The first gateway 21 transmits a message received from the management device 10 to the first lower-level ECU 31 and the second lower-level ECU 32. The second gateway 22 transmits a message received from the mid-level ECU 20 to the fourth lower-level ECU 34 and the fifth lower-level ECU 35.

The processing device 23 functions to check destination information included in a message transmitted from the management device 10 via the communication line 40. Upon receiving a message via the communication line 40, the processing device 23 of an electronic control unit checks the destination information to determine whether the received message is addressed to the processing device 23. When determining that the message is addressed to the processing device 23, the processing device 23 executes a process corresponding to the received signal. When determining that the message is not addressed to the processing device 23, the processing device 23 ignores the received signal. Also, the processing device 23 of an intermediate device determines that the message is not addressed to the intermediate device even when the message is addressed to an electronic control unit that is a relay destination of the intermediate device. The processing device 23 then relays the message toward the destination electronic control unit.

The processing device 23 of a target device that has received a message via the communication line 40 checks whether the message is addressed to the processing device 23. Only when the processing device 23 determines that the message is addressed to the processing device 23, is the target device started in response to the message.

When the management device 10 uses the second startup method, only some of the target devices connected to the communication line 40 are started. Unlike the first startup method, the management device 10 prevents target devices that are not originally intended to be started from being started. However, in the second startup method, each target device executes a process that determines whether a startup request signal is addressed to that target device. Accordingly, in the second startup method, the time required to start the target device is longer than in the first startup method. Therefore, in the second startup method, there is a possibility that an electronic control unit is not started within a startup request time required for a user to comfortably use the vehicle. The management device 10 may transmit, via the communication line 40, to multiple target devices, a message containing a startup request signal and identification information for a target device to which the startup request signal is addressed. That is, the management device 10 may start multiple target devices simultaneously.

Multiple target devices started by the management device 10 using the first or second startup method communicate with each other and execute a process to implement a specific function. While performing a specific function in this manner, the target devices implementing the function periodically transmit a signal requesting operation continuation to the management device 10. While receiving a signal requesting operation continuation from the target devices, the management device 10 transmits messages including startup request signals via the communication line 40 to the target devices implementing the function.

Each time a target device started by the management device 10 receives, via the communication line 40, a message that is addressed to the target device and includes a startup request signal from the management device 10, the target device continues operating for a predetermined period. When non-receipt of a message addressed to the target device and including a startup request signal from the management device 10 via the communication line 40 continues, the target device stops operating and transitions to a standby state.

The mid-level ECU 20 functions as either a target device or an intermediate device. Accordingly, the mid-level ECU 20 relays a message received from the management device 10 to a target device, and, when the message is addressed to that ECU, communicates with another target device to perform a specific function.

### <Flow of Processes for Selecting a Startup Method for a Target Device Executed by the Processing Device 11>

Fig. 4 illustrates a series of processes performed when the management device 10 selects a startup method for a target device. The series of processes is executed by the processing device 11 of the management device 10 performing processing in accordance with a target device startup program, which is stored in the storage device 12. The series of processes is executed when the management device 10 receives a startup request signal from another electronic control unit.

Upon starting the series of processes, the processing device 11 performs a process that identifies a vehicle condition in the process of step S101. For example, the processing device 11 identifies, as the vehicle condition, a time that has elapsed since a user operation performed on the vehicle. Specifically, the processing device 11 determines the vehicle condition by determining whether a time elapsed since the user turned off an ignition switch is within a predetermined time period. The processing device 11 may also include, in the vehicle condition, information indicating whether a user is present in the vehicle.

Next, in the process of step S102, the processing device 11 identifies an event corresponding to a specific function implemented by multiple target devices, based on the vehicle condition and a source of a startup request signal. The processing device 11 has identified the source of the startup request signal from the source information of the signal transmitted by the electronic control unit that transmitted the startup request signal. In addition, the processing device 11 has identified the vehicle condition in the process of step S101.

The processing device 11 refers to the first database 13, which is stored in the storage device 12, in the process of step S102.

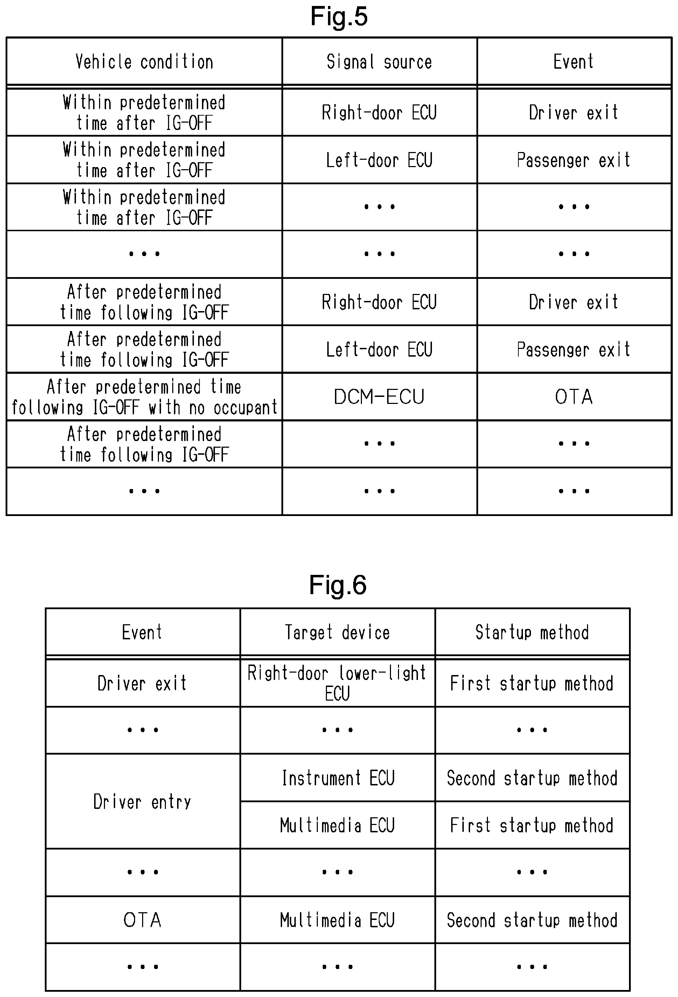

As illustrated in Fig. 5, the first database 13 stores data in which combinations of a source of a signal received by the management device 10 and a vehicle condition are associated with events. In Fig. 5, "IG-OFF" indicates that the vehicle user has turned off an ignition switch. The driver's seat of the vehicle is on the right side. For example, when the vehicle condition is within a predetermined time after IG-OFF and an electronic control unit that is a source of a signal is a right-door ECU, the processing device 11 refers to the first database 13 and extracts an event "driver exit," which indicates that the driver exits the vehicle. The right-door ECU is an electronic control unit that controls electrical components mounted on a right door.

Subsequently, in the process of step S103, the processing device 11 selects the startup method for the target device. In this step, the processing device 11 refers to the second database 14. Then, the processing device 11 selects the startup method for the target device by extracting the startup method corresponding to the event from the second database 14.

As illustrated in Fig. 6, the second database 14 stores data in which an event is associated with a startup method for each target device to be started. For example, by referring to the second database 14, the processing device 11 extracts information indicating that the target device to be started for performing a function corresponding to the event "driver exit" is an electronic control unit that controls a courtesy lamp provided at a lower portion of the right door. In the drawings and the following description, this electronic control unit may be referred to as a right-door lower-light ECU. Further, the processing device 11 extracts information indicating that the startup method for the right-door lower-light ECU is the first startup method.

After selecting the startup method for the target device in this manner, the processing device 11 ends the series of processes.

### <Procedure for Creating the Second Database 14>

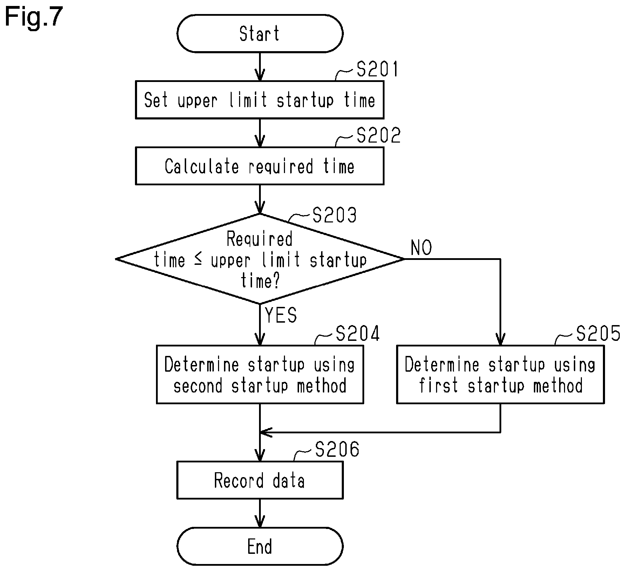

Fig. 7 illustrates a procedure for creating the second database 14, which is stored in the storage device 12.

In the process of step S201, a creator of the second database 14 sets an upper limit startup time. The upper limit startup time is an upper limit of an allowable time from when the management device 10 requests a target device to start to when the target device starts. The upper limit startup time is set for each combination of an event and a target device.

Next, in the process of step S202, the creator of the second database 14 calculates a required time. The required time is required for startup of a target device to be completed when the target device is started using the second startup method.

For example, the creator of the second database 14 calculates, as the required time, a value obtained by multiplying a reference value of a time required for an electronic control unit to start after receiving a message by the number of electronic control units involved before the message reaches a target device. The number of electronic control units involved before the message reaches the target device is the total number obtained by adding one target device to the number of intermediate devices through which a message passes before reaching the target device. The reference value of the time required for an electronic control unit to start after receiving a message may be, for example, a maximum value of the times required for startup of all electronic control units. Alternatively, the reference value may be an average value of times required for startup of all electronic control units.

For example, the creator of the second database 14 may calculate the required time by measuring the time from when the management device 10 transmits a message through the communication line 40 to when the target device is started.

Subsequently, in the process of step S203, the creator of the second database 14 determines whether the required time is less than or equal to the upper limit startup time. The creator of the second database 14 compares the upper limit startup time set in step S201 with the required time calculated in step S202. Through such a process, the creator of the second database 14 determines whether a target device is startable using the second startup method within the upper limit startup time.

When determining that the required time is less than or equal to the upper limit startup time (step S203: YES), the creator of the second database 14 proceeds to step S204. That is, when determining that the target device is startable using the second startup method within the upper limit startup time, the creator of the second database 14 proceeds to step S204. In the process of step S204, the creator of the second database 14 determines to start the target device using the second startup method.

When determining that the required time is greater than the upper limit startup time (step S203: NO), the creator of the second database 14 proceeds to step S205. That is, when determining that the target device is not startable using the second startup method within the upper limit startup time, the creator of the second database 14 proceeds to step S205. In the process of step S205, the creator of the second database 14 determines to start the target device using the first startup method.

After completing the process of step S204 or step S205, the creator of the second database 14 proceeds to step S206. In the process of step S206, the creator of the second database 14 records, as data, in the storage device of a computer, the startup method for the target device determined in step S204 or step S205. Then, the creator of the second database 14 ends the series of processes. The second database 14 is created by compiling data collected by performing such a series of processes for each combination of an event and a target device. The storage device 12 stores the second database 14 created in this manner.

### <Flow of Processes for Starting a Target Device by the Processing Device 11>

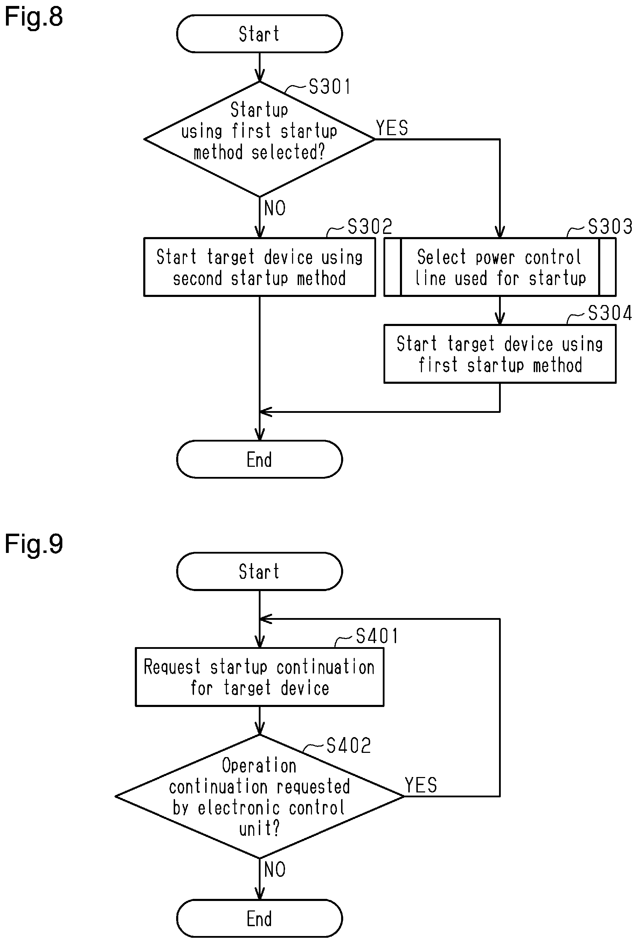

Fig. 8 illustrates a series of processes for starting a target device by the processing device 11. The series of processes is executed by the processing device 11 of the management device 10 performing processing in accordance with a startup program for an electronic control unit, which is stored in the storage device 12. The series of processes is executed once for each target device after the processing device 11 executes the series of processes illustrated in Fig. 4.

In the process of step S301, the processing device 11 determines whether it has selected the first startup method to start the target device. The processing device 11 performs the determination of step S301 based on the startup method selected in step S103 of Fig. 4.

When determining that the target device is not started using the first startup method (step S301: NO), the processing device 11 proceeds to step S302. That is, when the second startup method is selected as the startup method for the target device in step S103 of Fig. 4, the processing device 11 proceeds to step S302. In the process of step S302, the processing device 11 starts the target device using the second startup method.

When determining that the target device is started using the first startup method (step S301: YES), the processing device 11 proceeds to step S303. That is, when the first startup method is selected as the startup method for the target device in step S103 of Fig. 4, the processing device 11 proceeds to step S303.

In the process of step S303, the processing device 11 selects a power control line to be used to start the target device from the power control lines connected to the target device. As described with reference to Fig. 1, the in-vehicle network system 100 includes the first power control line 41 and the second power control line 42. For example, the second lower-level ECU 32 is connected to both the first power control line 41 and the second power control line 42. When the second lower-level ECU 32 is the target device, the processing device 11 selects a power control line used to start the second lower-level ECU 32 from the first power control line 41 and the second power control line 42. For example, only the second power control line 42 is connected to the first lower-level ECU 31. The processing device 11 selects the second power control line 42 as the power control line used to start the first lower-level ECU 31.

When the management device 10 starts target devices using the first startup method, the smaller the number of target devices connected to a power control line, the lower the power consumption tends to be during startup of the target devices. Accordingly, when selecting a power control line to be used for startup from multiple power control lines, the processing device 11 selects, as a power control line to be used for startup of target devices, a power control line that is connected to the target devices and that has a smaller number of target devices connected thereto. In this case, for example, when the second lower-level ECU 32 is a target device to be started, the processing device 11 selects, from the first power control line 41 and the second power control line 42, the first power control line 41, which has a smaller number of connected target devices, as the power control line to be used for startup of the first lower-level ECU 31.

When the power control line to be used for startup is selected, the processing device 11 proceeds to the next step S304. In the process of step S304, the processing device 11 transmits a startup request signal through the selected power control line to start the target device using the first startup method.

After executing the process of step S302 or step S304, the processing device 11 ends the series of processes.

### <Flow of Processes for Continuing Operation of a Target Device by the Processing Device 11>

Fig. 9 illustrates a series of processes for instructing continuing operation of a target device executed by the processing device 11. The series of processes is executed after the processing device 11 starts the target device through the series of processes illustrated in Fig. 8.

In the process of step S401, the processing device 11 requests the target device to continue startup. Specifically, as described above, the processing device 11 transmits a message containing a startup request signal to the target device through the communication line 40. The target device continues to operate in response to the received message. When there is a target device that is not a startup target and is started using the first startup method, the target device determines that the message from the communication line 40 is not addressed to the target device, and ignores the message. In this manner, the target device that is not a startup target remains in a state in which it ignores a message containing a startup request signal. As a result, the target device that is not a startup target stops operating and shifts to the standby state.

Next, in the process of step S402, the processing device 11 determines whether an electronic control unit is requesting continuation of operation of a target device that is implementing a specific function. As described above, while operating to implement a specific function, a target device implementing that function periodically transmits, to the management device 10, a signal requesting continuation of operation. A signal requesting continuation of operation of a target device implementing a specific function may also be transmitted to the management device 10 from an electronic control unit other than the target device implementing the specific function. While receiving a signal requesting continuation of operation, the processing device 11 determines that the electronic control unit is requesting continuation of operation of the target device implementing the specific function. When the processing device 11 no longer receives a signal requesting continuation of operation, the processing device 11 determines that the electronic control unit is not requesting continuation of operation of the target device implementing the specific function.

When determining that the electronic control unit is requesting continuation of operation of the target device implementing the specific function (step S402: YES), the processing device 11 performs the process of step S401 again. When determining that the electronic control unit is not requesting continuation of operation of the target device implementing the specific function (step S402: NO), the processing device 11 ends the series of processes. When terminating the series of processes, the processing device 11 no longer transmits, to the target device implementing the specific function, a message requesting continuation of startup. As a result, after a predetermined period elapses, the target device implementing the specific function stops operating and transitions to a standby state.

### <Operation of the Present Embodiment>

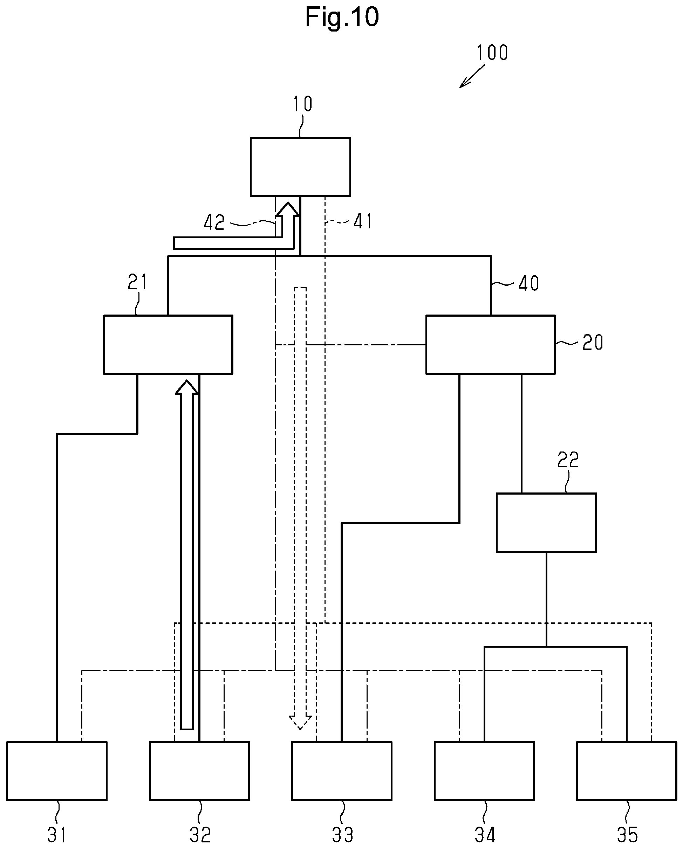

Figs. 10 to 12 each illustrate an example of a case in which the management device 10 starts a target device. Hereinafter, the manner in which the management device 10 starts a target device will be described using first to third examples, each illustrating a situation in which the management device 10 starts the target device. In the first to third examples, the first lower-level ECU 31 is an electronic control unit for a data communication module (DCM), which is an in-vehicle communication device. In the drawings and the following description, this electronic control unit may be referred to as a DCM-ECU. In the first to third examples, the second lower-level ECU 32 is a right-door ECU. In the first to third examples, the third lower-level ECU 33 is a right-door lower-light ECU. In the first to third examples, the fourth lower-level ECU 34 is an electronic control unit that controls a head-up display. In the first to third examples, the fifth lower-level ECU 35 is an electronic control unit that controls a multimedia system. In the drawings and the following description, this electronic control unit may be referred to as a multimedia ECU. In the first to third examples, the mid-level ECU 20 is an electronic control unit that controls an instrument cluster. In the drawings and the following description, the electronic control unit may be referred to as an instrument ECU.

Fig. 10 illustrates how the management device 10 starts a target device in the first example. In the first example, it is assumed that the door is opened and closed within a predetermined time since the ignition switch is turned off. In this case, the second lower-level ECU 32, which is the right-door ECU, detects the opening of the right door and then transmits a startup request signal to the management device 10. The startup request signal transmitted by the second lower-level ECU 32 is indicated by a solid white arrow in Fig. 10.

In the first example, the processing device 11 of the management device 10 first performs the process of step S101 in Fig. 4 to identify the vehicle condition as being within the predetermined period after IG-OFF.

Next, the processing device 11 refers to the first database 13 described with reference to Fig. 5 by performing the process of step S102 in Fig. 4. Based on the vehicle condition being within the predetermined period after IG-OFF and the signal source being the right-door ECU, the processing device 11 identifies the event as a driver exit.

Next, the processing device 11 refers to the second database 14 described with reference to Fig. 6 by performing the process of step S103 in Fig. 4. Then, based on the event being a driver exit, the processing device 11 extracts the information indicating that the target device to be started is the third lower-level ECU 33, which is a right-door lower-light ECU, and the startup method is the first startup method. In this manner, the processing device 11 identifies the target device to be started and selects a startup method for the target device.

Thereafter, the processing device 11 determines to start the third lower-level ECU 33 using the first startup method in step S301 of Fig. 8 and then selects a power control line to be used for startup in step S303. Because the number of target devices connected to the first power control line 41 is smaller than the number of target devices connected to the second power control line 42, the processing device 11 selects the first power control line 41.

Finally, in step S304, the processing device 11 starts the third lower-level ECU 33 using the first power control line 41. The startup request signal transmitted in this step from the management device 10 to the third lower-level ECU 33 through the first power control line 41 is indicated by a broken arrow in Fig. 10.

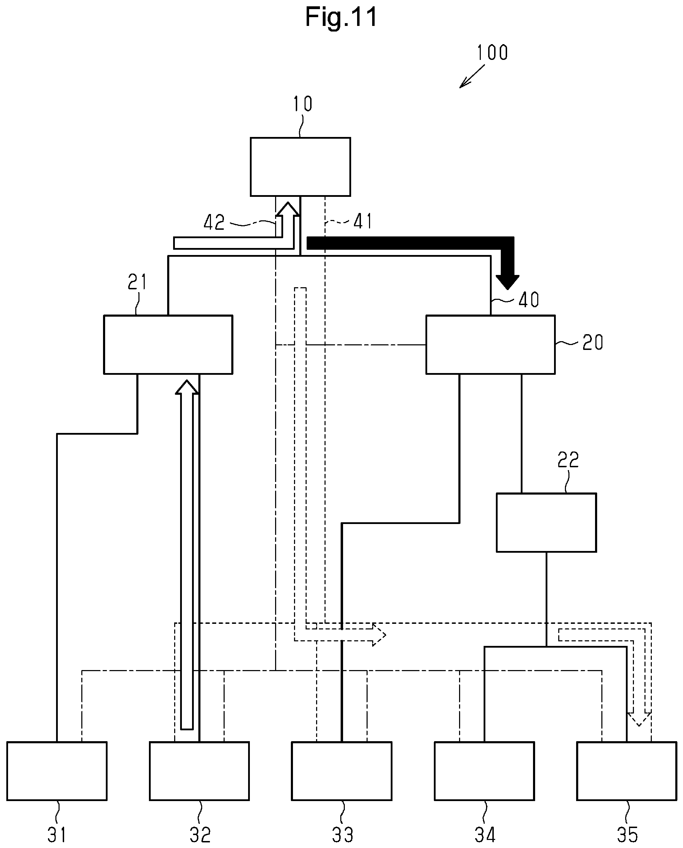

Fig. 11 illustrates how the management device 10 starts a target device in the second example. In the second example, it is assumed that the door is opened and closed within a predetermined time after the ignition switch is turned off. In this case, the second lower-level ECU 32, which is the right-door ECU, detects the opening of the right door and then transmits a startup request signal to the management device 10. The startup request signal transmitted by the second lower-level ECU 32 is indicated by a solid white arrow in Fig. 11.

In the second example, the processing device 11 of the management device 10 identifies the vehicle condition as being within the predetermined period after IG-OFF (step S101 in Fig. 4).

Next, the processing device 11 refers to the first database 13 described with reference to Fig. 5 (step S102 in Fig. 4). Based on the vehicle condition being within the predetermined period after IG-OFF and the signal source being the right-door ECU, the processing device 11 identifies the event as a driver entry.

Subsequently, the processing device 11 refers to the second database 14 described with reference to Fig. 6 (step S103 in Fig. 4). Then, based on the event being a driver entry, the processing device 11 extracts the information indicating that the instrument ECU and the multimedia ECU are target devices to be started. Further, the processing device 11 extracts the information indicating that the startup method for the instrument ECU is the second startup method and the startup method for the multimedia ECU is the first startup method.

Thus, in the second example, the processing device 11 selects a different startup method for each of the instrument ECU and the multimedia ECU. In this case, the processing device 11 performs the series of processes illustrated in Fig. 8 for each target device, thereby starting the target devices using their respective startup methods.

The startup request signal transmitted in this step from the management device 10 to the fifth lower-level ECU 35, which is the multimedia ECU, through the first power control line 41 is indicated by a broken arrow in Fig. 11. The message transmitted in this step from the management device 10 to the mid-level ECU 20, which is the instrument ECU, through the communication line 40 is a black arrow in Fig. 11.

As described above, even among target devices to be started for the same event, the startup methods may differ. This is because the time required to start a target device increases as the number of intermediate devices, through which a message transmitted from the management device 10 via the communication line 40 passes before reaching the target device, increases. When the second startup method is used, only the target device to be started can be started, thereby reducing power consumption. However, on the communication path via the communication line 40 between the management device 10 and the fifth lower-level ECU 35, two intermediate devices are interposed. When the fifth lower-level ECU 35 is started using the second startup method, the upper limit startup time is exceeded. Therefore, in the second example, the fifth lower-level ECU 35 is started using the first startup method, which results in a shorter startup time than the first startup method.

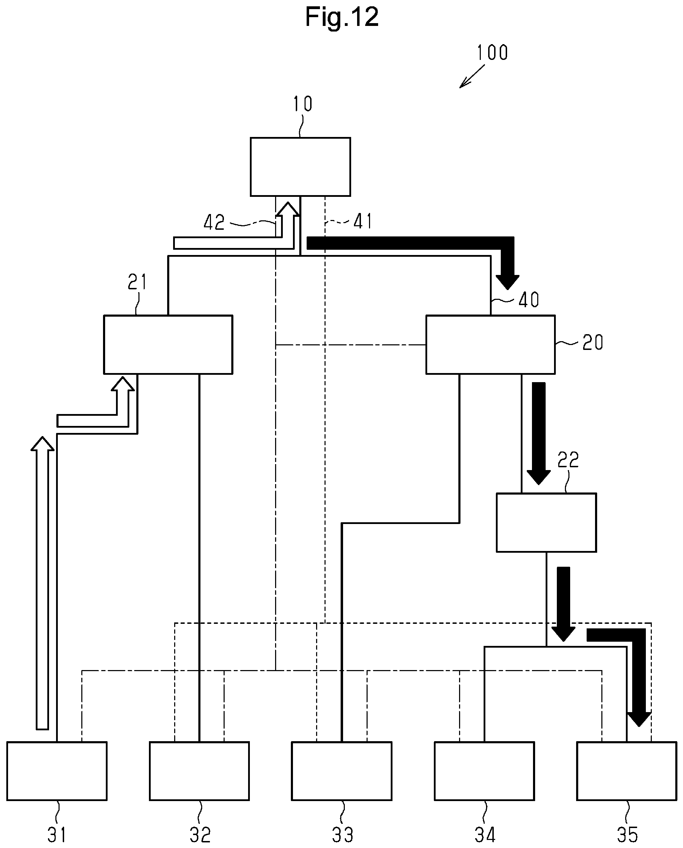

Fig. 12 illustrates how the management device 10 starts a target device in the third example. The third example assumes a situation in which the DCM-ECU transmits a startup request signal after a predetermined period has elapsed since the ignition switch was turned off. The startup request signal transmitted by the first lower-level ECU 31 (i.e., DCM-ECU) is represented by a solid white arrow in Fig. 12.

In the third example, the processing device 11 of the management device 10 first identifies that the vehicle condition is the predetermined period after IG-OFF and that no occupant is present (step S101 in Fig. 4). The presence or absence of an occupant can be identified using, for example, a seating sensor provided on a vehicle seat or a camera that monitors the vehicle interior.

Next, the processing device 11 refers to the first database 13 described with reference to Fig. 5 (step S102 in Fig. 4). Then, based on the vehicle condition being the predetermined period after IG-OFF and no occupant being present, and on the source of the signal being the DCM ECU, the processing device 11 identifies the event as over-the-air (OTA). OTA refers to updating in-vehicle software via wireless communication.

As described above, the vehicle condition identified by the processing device 11 is not limited to one identified solely based on the elapsed time since the ignition switch was turned off.

Subsequently, the processing device 11 refers to the second database 14 described with reference to Fig. 6 (step S103 in Fig. 4). Then, based on the event being OTA, the processing device 11 extracts the information indicating that the target device to be started is the multimedia ECU. Further, the processing device 11 extracts the information indicating that the startup method for the multimedia ECU is the second startup method.

In the third example, the processing device 11 selects the second startup method as the startup method for the fifth lower-level ECU 35, which is the multimedia ECU. In OTA operation without an occupant, the upper limit startup time for the multimedia ECU is relatively long. Accordingly, even when the fifth lower-level ECU 35, which is the multimedia ECU, is started using the second startup method, the startup time remains below the upper limit startup time. Therefore, in the third example, the processing device 11 selects the second startup method, which reduces power consumption compared with the first startup method, and starts the multimedia ECU using the second startup method. The message transmitted in this step from the management device 10 to the fifth lower-level ECU 35 via the communication line 40 is indicated by a black arrow in Fig. 12.

In this manner, the in-vehicle network system 100 selectively uses the first and second startup methods when starting the target device.

### <Advantages of the Present Embodiment>

(1) The in-vehicle network system 100 allows for the use of both the first startup method, which is a power-control-based startup method, and the second startup method, which is a communication-based startup method.
(2) In the in-vehicle network system 100, in the first startup method, the management device 10 performs power control that requests startup through a power control line directly connecting the management device 10 to the target devices, thereby starting all target devices connected to the power control line. By contrast, in the in-vehicle network system 100, in the second startup method, the management device 10 starts only some of the target devices by requesting startup through communication. In the first startup method, although startup is performed quickly, all target devices connected to the power control line used for startup, including target devices that are not originally intended to be started, are started. In the second startup method, although a specific target device is started, more time is required to start the target device than in the first startup method. Accordingly, the in-vehicle network system 100 selectively uses these two startup methods. As a result, the in-vehicle network system 100 reduces unnecessary power consumption caused using the first startup method. In addition, the in-vehicle network system 100 limits situations in which a target device fails to be started within a startup request time due to use of the second startup method.
(3) In the in-vehicle network system 100, when the management device 10 obtains a startup request signal, the management device 10 selects a method for starting a target device from the first and second startup methods. The management device 10 receives a startup request signal for starting a target device from another device that has detected an external operation. The in-vehicle network system 100 selects a startup method for the target device when the management device 10 obtains the startup request signal. As a result, the in-vehicle network system 100 starts the target device in response to an external operation.
(4) In the in-vehicle network system 100, the management device 10 selects a startup method from the first and second startup methods for each of multiple target devices. When multiple target devices are required to be started, the in-vehicle network system 100 changes the startup method depending on the target device. This allows the in-vehicle network system 100 to properly start the target devices.
(5) The in-vehicle network system 100 further includes power control lines that directly connect the management device 10 to target devices. In the in-vehicle network system 100, multiple power control lines are connected to the management device 10, each power control line being connected to a different combination of multiple target devices, and the target devices are connected to the power control lines. When the management device 10 selects the first startup method as a startup method for starting a target device, the management device 10 selects, from the power control lines connected to target devices, a power control line that is connected to target devices and that has a relatively small number of connected target devices. The management device 10 then requests startup of a target device through the selected power control line. When the management device 10 starts target devices using the first startup method, the smaller the number of target devices connected to a power control line, the lower the power consumption tends to be during startup of the target devices. Accordingly, when starting a target device using the first startup method, the in-vehicle network system 100 uses, from the power control lines connected to target devices, a power control line having a relatively small number of connected target devices. This allows the in-vehicle network system 100 to reduce power consumption when starting a target device using the first startup method.
(6) In the in-vehicle network system 100, when the management device 10 obtains a startup request signal from another device, the management device 10 receives information for identifying the device that transmitted the startup request signal. The management device 10 includes the storage device 12. The storage device 12 stores the first database 13, which stores data in which a combination of a source of a signal received by the management device 10 and a vehicle condition is associated with an event corresponding to a specific function implemented by multiple target devices. The storage device 12 also stores the second database 14, which stores data in which an event is associated with a startup method for starting a target device. The management device 10 extracts, from the first database 13, an event corresponding to the combination of the source of the received signal and the vehicle condition. The management device 10 also selects, from the second database 14, a startup method corresponding to the extracted event as a startup method for the target device. The in-vehicle network system 100 refers to the first database 13 to identify an event based on the combination of the source of the signal received by the management device 10 and the vehicle condition. Thereafter, the in-vehicle network system 100 selects a startup method for the target device corresponding to the event with reference to the second database 14. This allows the in-vehicle network system 100 to select a startup method for a target device in accordance with the combination of the source of the signal and the vehicle condition.
(7) The management device 10 starts multiple target devices communicably connected thereto. The management device 10 selects a startup method for starting a target device from the first and second startup methods. In the first startup method, the management device 10 starts a target device by electronic control that controls whether power is supplied to the target device. In the second startup method, the management device 10 starts a target device by requesting startup of the target device through communication from the management device 10. The management device 10 starts the target device using the selected startup method. The in-vehicle network system 100 selectively uses the first and second startup methods when starting a target device. As a result, the in-vehicle network system 100 allows the management device 10 to use both the first startup method, which is a power-control-based startup method, and the second startup method, which is a communication-based startup method.
(8) The data stored in the storage device 12 is generated through a step (step S202 in Fig. 7) of calculating the required time, which is required for completion of startup of a target device when the target device is started using the second startup method. The data stored in the storage device 12 is generated through a step (step S203 in Fig. 7) of determining, by comparing the upper limit startup time and the required time, whether the target device is startable using the second startup method within the upper limit startup time. The upper limit startup time is an upper limit of a time from transmission of a startup request signal by the management device 10 to startup of the target device. The data stored in the storage device 12 is generated through a step (step S204 in Fig. 7) of determining to start the target device using the second startup method when determining that the target device is startable using the second startup method within the upper limit startup time. The data stored in the storage device 12 is generated through a step (step S205 in Fig. 7) of determining to start the target device using the first startup method when determining that the target device is not startable using the second startup method within the upper limit startup time. In such a manner, the management device 10 stores the data generated by comparing the upper limit startup time with the required time. This allows the management device 10 to select a startup method by which the target device is startable within the upper limit startup time.
(9) The above target device startup program is used for a target device in the in-vehicle network system 100, which includes the management device 10 and multiple target devices that are communicably connected to the management device 10 and are started by the management device 10. The target device startup program causes the management device 10 to select a startup method for starting a target device from the first and second startup methods (Fig. 4). In the first startup method, the management device 10 starts a target device through power control that determines whether to supply power to the target device. In the second startup method, the management device 10 starts a target device by requesting startup of the target device through communication from the management device 10. The target device startup program further causes the management device 10 to start the target device using the selected startup method (Fig. 8). In this manner, the target device startup program implements processing for selectively using the first and second startup methods when starting a target device. As a result, the in-vehicle network system 100 allows the target device startup program to use both the first startup method, which is a power-control-based startup method, and the second startup method, which is a communication-based startup method.
(10) The above target device startup method is used for a target device in the in-vehicle network system 100, which includes the management device 10 and multiple target devices that are communicably connected to the management device 10 and are started by the management device 10. The target device startup method for the in-vehicle network system 100 includes a first step of selecting, by the management device 10, a startup method for starting a target device from the first and second startup methods. In the first startup method, the management device 10 starts a target device through power control that determines whether to supply power to the target device. In the second startup method, the management device 10 starts a target device by requesting startup of the target device through communication from the management device 10. The target device startup method for the in-vehicle network system 100 further includes a second step of starting, by the management device 10, the target device using the startup method selected through the first step. The target device startup method for the in-vehicle network system 100 selectively uses the first and second startup methods when starting a target device. As a result, the target device startup method for the in-vehicle network system 100 allows the in-vehicle network system 100 to use both the first startup method, which is a power-control-based startup method, and the second startup method, which is a communication-based startup method.

### <Modifications>

The present embodiment may be modified as follows. The present embodiment and the following modifications can be combined as long as the combined modifications remain technically consistent with each other.

In the above embodiment, the management device 10 starts multiple target devices. Instead, the management device 10 may start only one target device.

For example, if a target device is configured to independently implement a specific function, the management device 10 may start one target device. Further, for example, if the management device to be started is different depending on the target device, the management device 10 may start one target device.

In the above embodiment, the electronic control units in the in-vehicle network system 100 are communicably connected to each other via the communication line 40. Instead, the electronic control units in the in-vehicle network system 100 may be wirelessly connected for mutual communication. In this case, the management device 10 uses the second startup method to wirelessly start a target device without using the communication line 40.

In the above embodiment, the electronic control units in the in-vehicle network system 100 are supplied with power from the power supply. All electronic control units in the in-vehicle network system 100 may be supplied with power from a single power supply. Alternatively, multiple power supplies may each supply power to a different electronic control unit.

In the above embodiment, when using the second startup method, the management device 10 transmits, via the communication line 40, a message containing a startup request signal and identification information of a target device to which the startup request signal is sent. When the management device 10 starts a target device using the second startup method, the message does not have to contain the identification information of a target device to which the startup request signal is sent. For example, when starting a target device using the second startup method, the management device 10 may transmit a startup request signal to all target devices via the communication line 40. Then, the management device 10 transmits, together with the startup request signal, a message containing a signal requesting continuation of operation and identification information of a target device which is not a startup target and to which the startup request signal is sent.

In the above embodiment, when starting a target device using the first startup method, the management device 10 starts all of the target devices connected to a power control line. Alternatively, even when using the first startup method, the management device 10 may start only some of the target devices connected to a power control line.

In the above embodiment, when starting a target device using the second startup method, the management device 10 starts only some of the target devices connected to the communication line 40. Alternatively, even when using the second startup method, the management device 10 may start all of the target devices connected to the communication line 40.

In the process of step S303 in Fig. 8, the processing device 11 selects, as a power control line to be used for starting a target device, a power control line which is connected to the target device and to which a smaller number of target devices are connected. Alternatively, the processing device 11 may select a power control line to be used for starting the target device by calculating a total amount of power consumed at startup by multiple target devices connected to each power control line. In this case, the processing device 11 selects, from the power control lines connected to the target device, a power control line having the smallest power consumption to be used for starting the target device.

In other words, the in-vehicle network system 100 may employ the following configuration.

The in-vehicle network system 100 further includes power control lines that directly connect the management device 10 to target devices. In the in-vehicle network system 100, multiple power control lines are connected to the management device 10, each power control line being connected to a different combination of multiple target devices, and the target devices are connected to the power control lines. When the management device 10 selects the first startup method as a startup method for starting a target device, the management device 10 selects, from multiple power control lines connected to the target device, a power control line requiring the smallest amount of power to start the target device. The management device 10 then requests startup through the selected power control line. The in-vehicle network system 100 includes multiple power control lines. A single target device may be connected to multiple power control lines. When starting a target device using the first startup method, the in-vehicle network system 100 starts the target device using, from the power control lines connected to the target device, a power control line having the smallest power consumption. This allows the in-vehicle network system 100 to reduce power consumption when starting a target device using the first startup method.

In the above embodiment, when starting a target device using the first startup method, the management device 10 sends a startup request signal via a power control line. Alternatively, when starting a target device using the first startup method, the management device 10 may start the target device by controlling, via the power control line, the supply of power from a power supply.

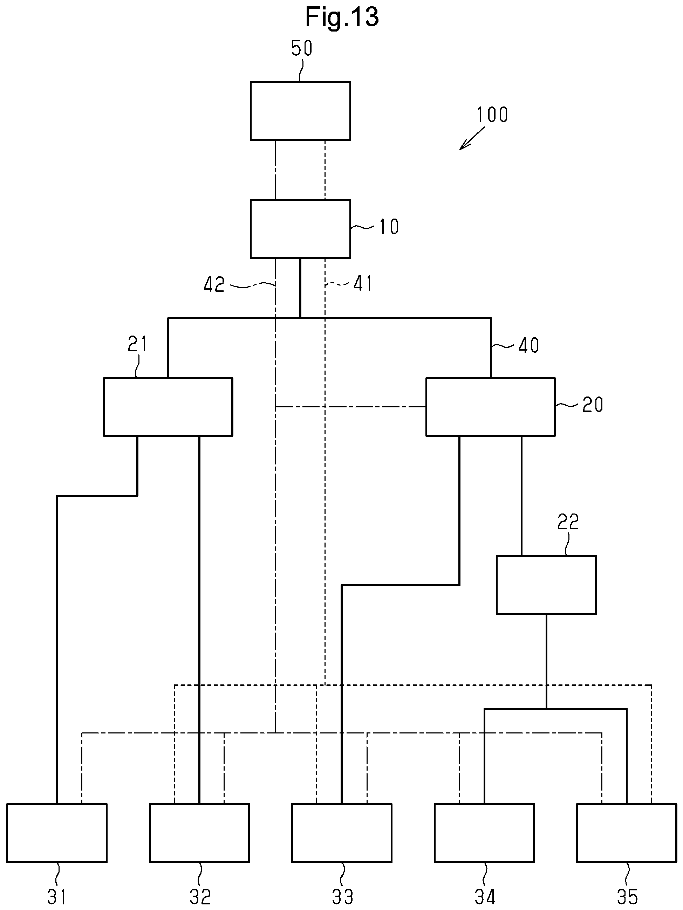

Fig. 13 illustrates a configuration of the in-vehicle network system 100 according to a first modification. In the in-vehicle network system 100 of the first modification, in the first startup method, the management device 10 controls the supply of power from a power supply 50 to a target device via a power control line.

As illustrated in Fig. 13, the management device 10 is connected to the power supply 50 via the first power control line 41 and the second power control line 42. Target devices are not directly connected to the power supply 50 via the first power control line 41 or the second power control line 42, but are connected to the power supply 50 via the management device 10.

The management device 10 includes a relay for each of the first power control line 41 and the second power control line 42. The management device 10 cuts off the supply of power from the power supply 50 to the target device by opening the relay, and supplies power from the power supply 50 to the target device by closing the relay.

In the in-vehicle network system 100 of the first modification, the management device 10 starts the target devices connected to the first power control line 41 by closing the relay of the first power control line 41. In the in-vehicle network system 100 of the first modification, the management device 10 starts the target devices connected to the second power control line 42 by closing the relay of the second power control line 42. In this manner, even when a configuration is adopted in which the management device 10 controls the supply of power from the power supply to the target devices via a power control line, the first startup method is implemented in the same manner as in the above embodiment.

In the above embodiment, the management device 10 identifies an event based on a combination of information indicating a source of a signal and a vehicle condition, and then selects a startup method for a target device in accordance with the event. Alternatively, the management device 10 may select a startup method for a target device in accordance with content of a startup request signal received from another device.

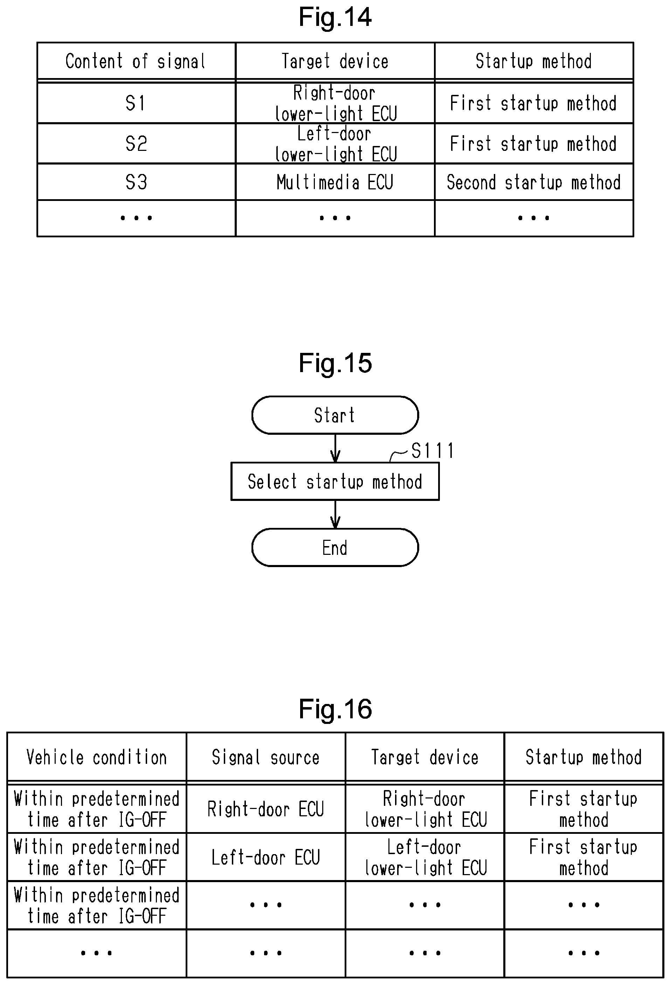

Fig. 14 illustrates a database stored in the storage device 12 in the in-vehicle network system 100 according to a second modification. The storage device 12 stores the database illustrated in Fig. 14 instead of the first database 13 and the second database 14, which are employed in the above embodiment.

The database illustrated in Fig. 14 stores data in which content of a startup request signal received by the management device 10 is associated with a startup method for each target device. The content of the startup request signal includes, for example, information identifying the source of the signal described above. The content of the startup request signal may also include, for example, a type of data such as vehicle speed, temperature, or position information, or a magnitude of such data. In Fig. 14, different contents of startup request signals are distinguished by being denoted as S1, S2, and S3.

Fig. 15 illustrates a series of processes in which the processing device 11 selects a startup method for a target device in the in-vehicle network system 100 according to the second modification. In the second modification, the processing device 11 executes the series of processes illustrated in Fig. 15 instead of the series of processes illustrated in Fig. 4.

In the process of step S111, the processing device 11 selects a startup method for a target device. The processing device 11 refers to the database illustrated in Fig. 14. The processing device 11 selects the startup method for the target device by extracting, from the database illustrated in Fig. 14, a startup method corresponding to the content of the startup request signal. After selecting the startup method for the target device in this manner, the processing device 11 ends the series of processes.

The management device 10 includes the storage device 12. The storage device 12 stores a database in which content of a startup request signal acquired by the management device 10 is associated with a startup method for starting a target device. The management device 10 refers to the database to select, as the startup method for the target device, a startup method corresponding to the acquired content of the startup request signal.

The in-vehicle network system 100 refers to the database to select a startup method for a target device in accordance with content of a signal acquired by the management device 10. This allows the in-vehicle network system 100 to select the startup method for the target device in accordance with the content of the signal acquired by the management device 10.

In the above embodiment, the management device 10 may select a startup method for a target device in accordance with a combination of content of a startup request signal acquired from another device and a vehicle condition.

Fig. 16 illustrates a database stored in the storage device 12 in the in-vehicle network system 100 according to the third modification. The storage device 12 stores the database illustrated in Fig. 16 instead of the first database 13 and the second database 14, which are employed in the above embodiment.

The database illustrated in Fig. 16 stores data in which a combination of content of a startup request signal received by the management device 10 and a vehicle condition is associated with a startup method for each target device. In the database illustrated in Fig. 16, information indicating the source of the signal is used as the content of the startup request signal.

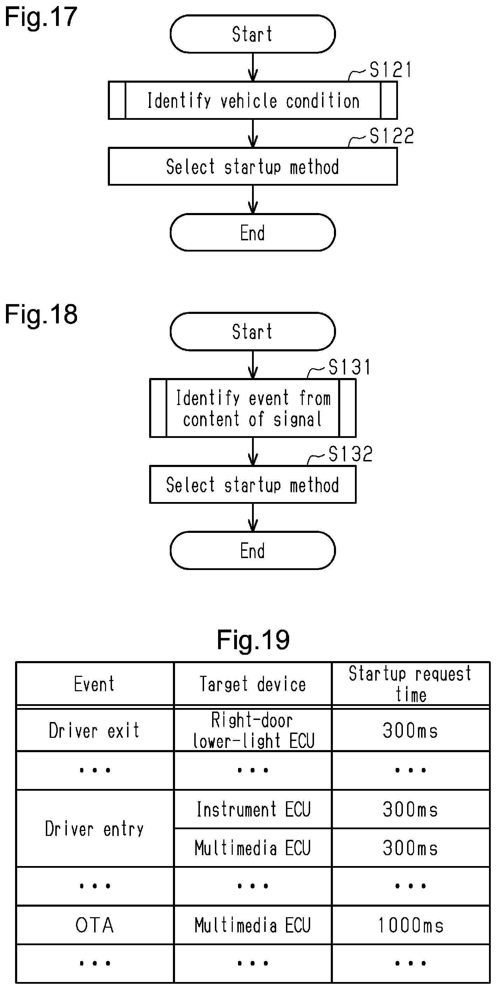

Fig. 17 illustrates a series of processes in which the processing device 11 selects a startup method for a target device in the in-vehicle network system 100 according to the third modification. In this modification, the processing device 11 executes the series of processes illustrated in Fig. 17 instead of the series of processes illustrated in Fig. 4.

In the process of step S121, the processing device 11 performs a process that identifies a vehicle condition. This process is the same as that of step S101 in Fig. 4.

In the process of step S122, the processing device 11 selects a startup method for a target device. The processing device 11 refers to the database illustrated in Fig. 16. The processing device 11 selects the startup method for the target device by extracting, from the database illustrated in Fig. 16, a startup method corresponding to a combination of content of the startup request signal and the vehicle condition. After selecting the startup method for the target device in this manner, the processing device 11 ends the series of processes.

The management device 10 includes the storage device 12. The storage device 12 stores a database in which a combination of content of a startup request signal acquired by the management device 10 and a vehicle condition is associated with a startup method for starting a target device. The management device 10 refers to the database to select, as the startup method for the target device, a startup method corresponding to the acquired combination of the content of the startup request signal and the vehicle condition. The in-vehicle network system 100 refers to the database to select a startup method for a target device in accordance with the combination of the content of the signal acquired by the management device 10 and the vehicle condition. This allows the in-vehicle network system 100 to select the startup method for the target device in accordance with the content of the signal acquired by the management device 10 and the vehicle condition.

When acquiring a startup request signal from another device, the management device 10 receives information indicating the source of the signal, which is information for identifying the device that transmitted the startup request signal. Accordingly, the in-vehicle network system 100 refers to the database to select a startup method for a target device in accordance with a combination of the signal source acquired by the management device 10 and the vehicle condition. This allows the in-vehicle network system 100 to select a startup method for a target device in accordance with the combination of the source of the signal and the vehicle condition.

In the above embodiment, another device transmits, as a startup request signal, information indicating a source of a signal, which is information for identifying that device, to the management device 10. Alternatively, another device may transmit, as the startup request signal, a signal indicating an event itself. In this case, the management device 10 selects a startup method for a target device in accordance with the event acquired from the other device.

Fig. 18 illustrates a series of processes in which the processing device 11 selects a startup method for a target device in the in-vehicle network system 100 according to a fourth modification. In this modification, the processing device 11 executes the series of processes illustrated in Fig. 18 instead of the series of processes illustrated in Fig. 4.

In the process of step S131, the processing device 11 identifies an event based on content of a signal acquired from another device.

Next, in the process of step S132, the processing device 11 selects a startup method for a target device. In this case, the processing device 11 refers to the second database 14 illustrated in Fig. 6. Then, the processing device 11 selects the startup method for the target device by extracting the startup method corresponding to the event from the second database 14. After selecting the startup method for the target device in this manner, the processing device 11 ends the series of processes.

In the in-vehicle network system 100 according to the fourth modification, the first database 13 is not referred to.

When acquiring a startup request signal from the other device, the management device 10 receives information on an event corresponding to a specific function implemented by multiple target devices. The management device 10 includes the storage device 12. The storage device 12 stores a database in which events are associated with startup methods for starting target devices. The management device 10 refers to the database to select a startup method corresponding to the received event as the startup method for the target device.

The in-vehicle network system 100 refers to the database to select a startup method for a target device in accordance with the event acquired by the management device 10. This allows the in-vehicle network system 100 to select the startup method for the target device in accordance with the event acquired by the management device.

In the above embodiment, the processing device 11 selects a startup method for a target device by extracting, from a database, a startup method for each target device. Alternatively, when acquiring a startup request signal from another device, the processing device 11 may select a target device startup method by calculating, for each target device, the required time described above without directly extracting the target device startup method from the database.

In the following fifth to eighth modifications, a startup request time is set for each target device. In the fifth to eighth modifications, the startup request time is a time required for all target devices necessary to implement a specific function to complete startup. For example, a startup request time for lighting a courtesy lamp of a right door when a user exits a driver's seat is 300 ms. That is, when the user exits the driver's seat, all target devices necessary for lighting the courtesy lamp below the right door are required to be started within 300 ms. The startup request time may be set not for each target device but for each combination of target devices that implement a specific function.

Fig. 19 illustrates a database stored in the storage device 12 in the in-vehicle network system 100 according to a fifth modification. The storage device 12 stores the database illustrated in Fig. 19 instead of the second database 14, which is employed in the above embodiment.

The database illustrated in Fig. 19 stores data in which an event is associated with a startup request time set for each target device.

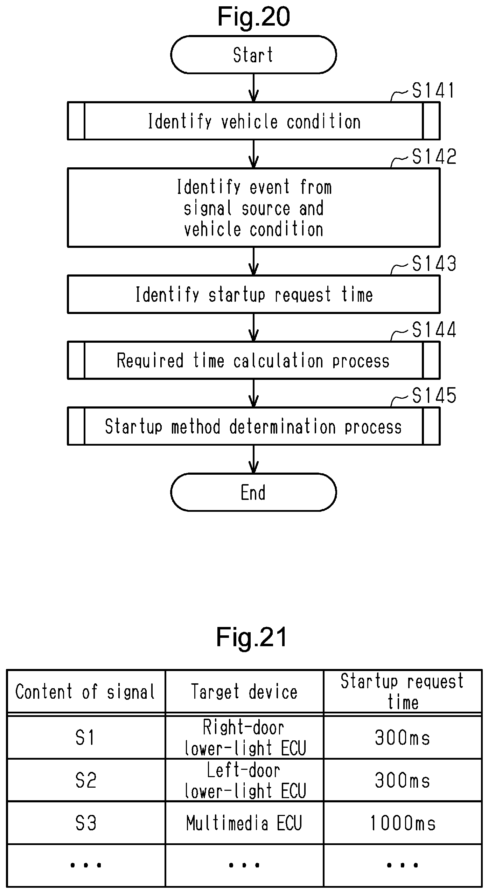

Fig. 20 illustrates a series of processes for selecting a startup method for a target device executed by the processing device 11 in the in-vehicle network system 100 of the fifth modification. In the in-vehicle network system 100 of the fifth modification, the processing device 11 executes the series of processes illustrated in Fig. 20 instead of the series of processes illustrated in Fig. 4.

In the process of step S141, the processing device 11 performs a process that identifies a vehicle condition. This process is the same as that of step S101 in Fig. 4.

In the process of step S142, the processing device 11 identifies an event from a combination of information indicating a source of the signal and the vehicle condition. This process is the same as that of step S102 in Fig. 4.

In the process of step S143, the processing device 11 identifies a startup request time for each target device. In this case, the processing device 11 refers to the database illustrated in Fig. 19. Then, the processing device 11 identifies the startup request time for each target device by extracting, from the database illustrated in Fig. 19, a startup request time corresponding to the event.

In the process of step S144, the processing device 11 calculates the required time. In this process, the processing device 11 calculates a required time based on a reference time required for an electronic control unit to start after receiving a message, the required time being calculated by multiplying the reference time by the number of electronic control units involved before the message reaches the target device. The number of electronic control units involved before the message reaches the target device is the total number obtained by adding one target device to the number of intermediate devices through which a message passes before reaching the target device. In order to execute such a process, the storage device 12 stores topology information of the in-vehicle network.

In the process of step S145, the processing device 11 performs a startup method selection process. The startup method selection process selects a startup method for a target device by comparing the startup request time with the required time. When the required time is greater than the startup request time, the processing device 11 selects starting the target device using the first startup method. When the required time is less than or equal to the startup request time, the processing device 11 selects starting the target device using the second startup method. After selecting the startup method for the target device in this manner, the processing device 11 ends the series of processes.

The startup request time is a preset time required for all target devices necessary to implement a specific function to complete startup. When obtaining a startup request signal from another device, the management device 10 receives information for identifying the device that transmitted the startup request signal. The management device 10 includes the storage device 12. The storage device 12 stores a first database storing data in which a combination of a source of a signal received by the management device 10 and a vehicle condition is associated with an event that is a specific function to be executed by a target device. The storage device 12 also stores a second database storing data in which events are associated with startup request times. The storage device 12 further stores topology information of the in-vehicle network. The management device 10 extracts, by referring to the first database, an event corresponding to a combination of the source of the received signal and the vehicle condition. The management device 10 extracts, by referring to the second database, a startup request time corresponding to the event. Then, the management device 10 calculates the required time, which is required when the target device is started using the second startup method, based on a position of the target device relative to the management device 10 in the in-vehicle network. When the required time is greater than the extracted startup request time, the management device 10 selects starting the target device using the first startup method. When the required time is less than or equal to the extracted startup request time, the management device 10 selects starting the target device using the second startup method.

The in-vehicle network system 100 refers to the first database 13 to identify an event from a combination of a source of a signal obtained by the management device 10 and a vehicle condition. Then, the in-vehicle network system 100 selects a startup method for a target device by comparing the required time calculated according to the event with the startup request time. This allows the in-vehicle network system 100 to select a startup method for a target device such that the time required to start the target device becomes shorter than the startup request time.

In the fifth modification described with reference to Figs. 19 and 20, the management device 10 identifies an event from a combination of a source of a signal and a vehicle condition, and then identifies a startup request time for a target device in accordance with the event. Alternatively, the management device 10 may identify a startup request time for a target device in accordance with content of a startup request signal acquired from another device.

Fig. 21 illustrates a database stored in the storage device 12 in the in-vehicle network system 100 according to the sixth modification. The storage device 12 stores the database illustrated in Fig. 21 instead of the first database 13 and the second database 14 in the above embodiment.

The database illustrated in Fig. 21 stores data in which content of a startup request signal acquired by the management device 10 is associated with a startup request time set for each target device. The content of the startup request signal includes, for example, information identifying the source of the signal described above. The content of the startup request signal may also include, for example, a type of data such as vehicle speed, temperature, or position information, or a magnitude of such data. In Fig. 21, different contents of startup request signals are distinguished by being denoted as S1, S2, and S3.

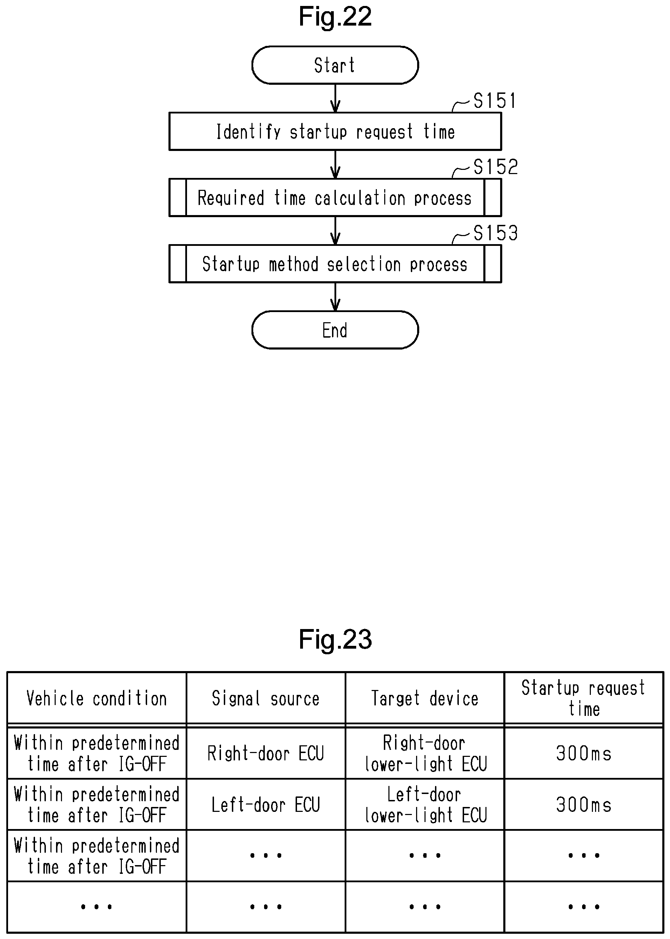

Fig. 22 illustrates a series of processes in which the processing device 11 selects a startup method for a target device in the in-vehicle network system 100 according to the sixth modification. In the sixth modification, the processing device 11 executes the series of processes illustrated in Fig. 22 instead of the series of processes illustrated in Fig. 4.

In the process of step S151, the processing device 11 identifies a startup request time for each target device. In this case, the processing device 11 refers to the database illustrated in Fig. 21. The processing device 11 identifies the startup request time for each target device by extracting, from the database illustrated in Fig. 21, a startup request time corresponding to content of the startup request signal.

In the process of step S152, the processing device 11 calculates the required time. This process is the same as that of step S144 in Fig. 20.

In the process of step S153, the processing device 11 performs a startup method selection process. This process is the same as that of step S145 in Fig. 20. After selecting the startup method for the target device in this manner, the processing device 11 ends the series of processes.

The startup request time is a preset time required for all target devices necessary to implement a specific function to complete startup. The management device 10 includes the storage device 12. The storage device 12 stores a database in which content of a startup request signal acquired by the management device 10 is associated with a startup request time, and topology information of the in-vehicle network. The management device 10 extracts, from the database, a startup request time corresponding to content of a received startup request signal. The management device 10 calculates the required time, which is required when a target device is started using the second startup method, based on a position of the target device relative to the management device 10 in the in-vehicle network. The management device 10 selects the first startup method for starting the target device when the required time is longer than the extracted startup request time. When the required time is less than or equal to the extracted startup request time, the management device 10 selects starting the target device using the second startup method.

The in-vehicle network system 100 selects a startup method for a target device by comparing the startup request time with the required time calculated in accordance with content of a startup request signal received by the management device 10. This allows the in-vehicle network system 100 to select a startup method for a target device such that the time required to start the target device becomes shorter than the startup request time.

In the fifth modification described with reference to Figs. 19 and 20, the management device 10 identifies an event from a combination of a source of a signal and a vehicle condition, and then identifies a startup request time for a target device in accordance with the event. Instead, the management device 10 may select a startup request time for a target device in accordance with a combination of content of a startup request signal acquired from another device and a vehicle condition.

Fig. 23 illustrates a database stored in the storage device 12 in the in-vehicle network system 100 according to the seventh modification. The storage device 12 stores the database illustrated in Fig. 23 instead of the first database 13 and the second database 14 in the above embodiment.

The database illustrated in Fig. 23 stores data in which a combination of content of a startup request signal received by the management device 10 and a vehicle condition is associated with a startup request time for each target device. In the database illustrated in Fig. 23, information indicating a source of the signal is used as the content of the startup request signal.

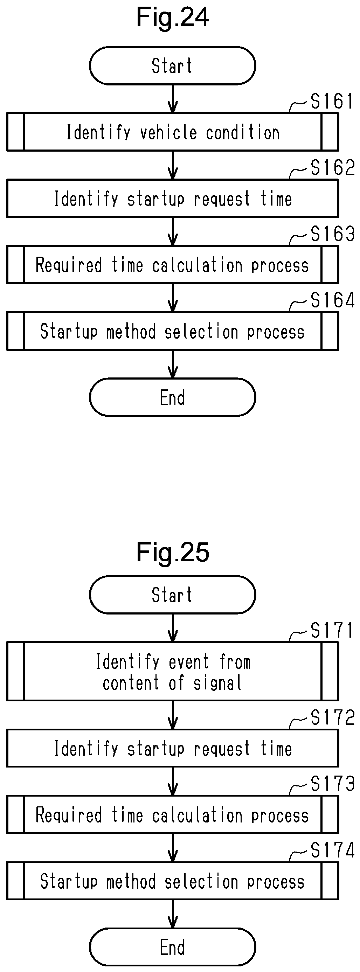

Fig. 24 illustrates a series of processes in which the processing device 11 selects a startup method for a target device in the in-vehicle network system 100 according to the seventh modification. In the seventh modification, the processing device 11 executes the series of processes illustrated in Fig. 24 instead of the series of processes illustrated in Fig. 4.

In the process of step S161, the processing device 11 performs a process that identifies a vehicle condition. This process is the same as that of step S101 in Fig. 4.

In the process of step S162, the processing device 11 identifies a startup request time for each target device. In this case, the processing device 11 refers to the database illustrated in Fig. 23. The processing device 11 identifies the startup request time for each target device by extracting, from the database illustrated in Fig. 23, a startup request time corresponding to a combination of content of the startup request signal and the vehicle condition.

In the process of step S163, the processing device 11 calculates the required time. This process is the same as that of step S144 in Fig. 20.

In the process of step S164, the processing device 11 performs the startup method selection process. This process is the same as that of step S145 in Fig. 20. After selecting the startup method for the target device in this manner, the processing device 11 ends the series of processes.

The startup request time is a preset time required for all target devices necessary to implement a specific function to complete startup. The management device 10 includes the storage device 12. The storage device 12 stores a database in which a combination of content of a startup request signal acquired by the management device 10 and a vehicle condition is associated with a startup request time, and topology information of the in-vehicle network. The management device 10 extracts, from the database, a startup request time corresponding to a combination of content of a received startup request signal and a vehicle condition. The management device 10 calculates the required time, which is required when a target device is started using the second startup method, based on a position of the target device relative to the management device 10 in the in-vehicle network. The management device 10 selects the first startup method for starting the target device when the required time is greater than the extracted startup request time. The management device 10 selects starting the target device using the second startup method when the required time is less than or equal to the extracted startup request time.

The in-vehicle network system 100 selects a startup method for a target device by comparing the required time, which is calculated in accordance with content of a startup request signal acquired by the management device 10 and a vehicle condition, with the startup request time. This allows the in-vehicle network system 100 to select a startup method for a target device such that the time required to start the target device becomes shorter than the startup request time.

When obtaining a startup request signal from another device, the management device 10 receives information for identifying the device that has transmitted the startup request signal. The in-vehicle network system 100 selects a startup method for a target device by comparing the required time, which is calculated in accordance with a source of the signal received by the management device 10, with the startup request time. This allows the in-vehicle network system 100 to select a startup method for a target device such that the time required to start the target device becomes shorter than the startup request time.

In the fifth modification described with reference to Figs. 19 and 20, another device transmits, as a startup request signal, information for identifying the device that has transmitted the startup request signal to the management device 10. Alternatively, another device may transmit, as a startup request signal, a signal indicating an event itself. In this case, the management device 10 identifies a startup request time for a target device in accordance with the event received from the other device.

Fig. 25 illustrates a series of processes in which the processing device 11 selects a startup method for a target device in the in-vehicle network system 100 according to the eighth modification. In the eighth modification, the processing device 11 executes the series of processes illustrated in Fig. 25 instead of the series of processes illustrated in Fig. 4.

In the process of step S171, the processing device 11 identifies an event based on a signal received from another device. This process is the same as that of step S131 illustrated in Fig. 18.

In the process of step S172, the processing device 11 identifies a startup request time for a target device. In this case, the processing device 11 refers to the database illustrated in Fig. 19. Then, the processing device 11 identifies the startup request time for the target device by extracting, from the database illustrated in Fig. 19, a startup request time corresponding to the event.

In the process of step S173, the processing device 11 calculates the required time. This process is the same as that of step S144 in Fig. 20.

In the process of step S174, the processing device 11 performs the startup method selection process. This process is the same as that of step S145 in Fig. 20. After selecting the startup method for the target device in this manner, the processing device 11 ends the series of processes.

The startup request time is a preset time required for all target devices necessary to implement a specific function to complete startup. When acquiring a startup request signal from another device, the management device 10 acquires information on an event corresponding to a specific function implemented by multiple target devices. The management device 10 includes the storage device 12. The storage device 12 stores a database in which events are associated with startup request times, and topology information of the in-vehicle network. The management device 10 extracts, from the database, a startup request time corresponding to a received event. The management device 10 calculates the required time, which is required when a target device is started using the second startup method, based on a position of the target device relative to the management device 10 in the in-vehicle network. When the required time is greater than the extracted startup request time, the management device 10 selects the first startup method for starting the target device. When the required time is less than or equal to the extracted startup request time, the management device 10 selects starting the target device using the second startup method.

The in-vehicle network system 100 selects a startup method for a target device by comparing the required time, which is calculated in accordance with an event acquired by the management device 10, with the startup request time. This allows the in-vehicle network system 100 to select a startup method for a target device such that the time required to start the target device becomes shorter than the startup request time.

In the above embodiment, the management device selects a startup method by referring to a database. Alternatively, the in-vehicle network system 100 may select a startup method without using a database. For example, the in-vehicle network system 100 further includes intermediate devices that relay communication from the management device 10 to a target device. In the in-vehicle network system 100, the management device 10 selects the second startup method as the startup method when the number of intermediate devices present on a communication path between the management device 10 and the target device is less than or equal to a predetermined number.

On a communication path using the communication line 40 in the in-vehicle network system 100, intermediate devices that relays a message from the management device 10 may be present. As the number of intermediate devices through which a message passes before reaching a target device decreases, a delay before the target device is started is less likely to increase. Accordingly, when the number of intermediate devices is relatively small, the target device is startable within the startup request time even using the second startup method.

The in-vehicle network system 100 starts a target device using the second startup method when the number of intermediate devices through which a startup request message passes before reaching the target device is less than or equal to the predetermined number. This allows the in-vehicle network system to start the target device within the startup request time while reducing power consumption of the target device.

In this modification, the in-vehicle network system 100 may select the first startup method for starting the target device when the number of intermediate devices present on the communication path between the management device 10 and the target device exceeds the predetermined number.

When a target device is started using the second startup method, a delay before the target device is started increases as the number of intermediate devices through which a message passes before reaching the target device increases. Accordingly, when the number of intermediate devices is relatively large, the target device is not startable within the startup request time using the second startup method. Thus, the in-vehicle network system 100 starts the target device using the first startup method when the number of intermediate devices through which a message passes before reaching the target device is relatively large. This allows the in-vehicle network system 100 to start the target device within the startup request time.

In addition, the management device 10 may select a startup method from the first and second startup methods by using a machine-learning-trained model stored in the storage device 12, and start a target device using the selected startup method. The machine-learning-trained model is obtained, for example, by training a model through supervised learning.

Training data for this case defines startup methods under various conditions such that the second startup method is basically selected, and the first startup method is selected when the target device is not startable within the startup request time using the second startup method. Examples of the various conditions include a combination of content of a startup request signal and a vehicle condition.

### <Clauses>

Technical concepts that can be recognized from the above embodiment and modifications will now be described.

[Clause 1] An in-vehicle network system, including:
a management device; and
target devices communicably connected to the management device and started by the management device, where
the management device is configured to:
   select a startup method for starting at least one target device of the target devices from:
      a first startup method for starting the at least one target device through power control that controls whether to supply power to the at least one target device; and
      a second startup method for starting the at least one target device by requesting, from the management device, startup of the at least one target device via communication; and
   start the at least one target device using the selected startup method.

[Clause 2] The in-vehicle network system according to clause 1, further including power control lines including a first power control line that directly connects the management device to the target devices, where
the first power control line directly connects the management device to some of the target devices including the at least one target device, and
the management device is configured to:
   in the first startup method, start all of the target devices connected to the first power control line through the power control to request startup via the first power control line, the first power control line directly connecting the management device to the at least one target device; and
   in the second startup method, start only some of the target devices by requesting startup via communication.

[Clause 3] The in-vehicle network system according to clause 1 or 2, where
the management device is configured to select a method for starting the at least one target device from the first startup method and the second startup method upon obtaining a startup request signal.

[Clause 4] The in-vehicle network system according to any one of clauses 1 to 3, where
the management device is configured to select the startup method, from the first startup method and the second startup method, for each of the target devices.

[Clause 5] The in-vehicle network system according to any one of clauses 1 to 4, further including power control lines that directly connect the management device to the target devices, where
each of the power control lines is connected to a different combination of the target devices, and
the management device is configured to:
   when the first startup method is selected as the startup method for starting the at least one target device, select, from the power control lines connected to the at least one target device, one power control line that requires the smallest amount of power to start the at least one target device; and
   request startup through the selected power control line.

[Clause 6] The in-vehicle network system according to any one of clauses 1 to 5, further including power control lines that directly connect the management device to the target devices, where
each of the power control lines is connected to a different combination of the target devices, and
the management device is configured to:
   when the first startup method is selected as the startup method for starting the at least one target device, select, from the power control lines connected to the at least one target device, one power control line that is connected to the at least one target device and is connected to a relatively small number of target devices; and
   request startup through the selected power control line.

[Clause 7] The in-vehicle network system according to any one of clauses 1 to 6, further including intermediate devices that relay communication from the management device to the target devices, where
the management device is configured to select the second startup method as the startup method when the number of the intermediate devices interposed in a communication path between the management device and the at least one target device is less than or equal to a predetermined number.

[Clause 8] The in-vehicle network system according to clause 7, where
the management device is configured to select the first startup method as the startup method when the number of the intermediate devices interposed in the communication path between the management device and the at least one target device is greater than the predetermined number.

[Clause 9] The in-vehicle network system according to any one of clauses 1 to 8, where
the management device includes a storage device,
the storage device stores a database storing data in which the startup method for starting the at least one target device is associated with content of a startup request signal obtained by the management device, and
the management device is configured to refer to the database to select, as the startup method for the at least one target device, the startup method corresponding to the content of the obtained startup request signal.

[Clause 10] The in-vehicle network system according to any one of clauses 1 to 8, where
the management device includes a storage device,
the storage device stores a database storing data in which a combination of content of a startup request signal obtained by the management device and a vehicle condition is associated with the startup method for starting the at least one target device, and
the management device is configured to refer to the database to select, as the startup method for the at least one target device, the startup method corresponding to the combination of the content of the obtained startup request signal and the vehicle condition.

[Clause 11] The in-vehicle network system according to clause 10, where
the management device is configured to receive, when obtaining the startup request signal from another device, information for identifying the other device that transmitted the startup request signal.

[Clause 12] The in-vehicle network system according to any one of clauses 1 to 8, where
the management device is configured to receive, when obtaining a startup request signal from another device, information on an event corresponding to a specific function implemented by the target devices,
the management device includes a storage device,
the storage device stores a database storing data in which the event is associated with the startup method for starting the target device, and
the management device is configured to refer to the database to select, as the startup method for the at least one target device, the startup method corresponding to the received event.

[Clause 13] The in-vehicle network system according to any one of clauses 1 to 8, where
the management device is configured to receive, when obtaining a startup request signal from another device, information for identifying the other device that transmitted the startup request signal,
the management device includes a storage device,
the storage device stores:
   a first database storing data in which a combination of a source of a signal received by the management device and a vehicle condition is associated with an event corresponding to a specific function implemented by the target devices; and
   a second database storing data in which the event is associated with the startup method for starting the at least one target device, and
the management device is configured to:
   extract, from the first database, the event corresponding to the combination of the source of the received signal and the vehicle condition; and
   select, by referring to the second database, the startup method corresponding to the extracted event as the startup method for the at least one target device.

[Clause 14] The in-vehicle network system according to any one of clauses 1 to 7, where
a startup request time is a preset time required for all of the target devices necessary to implement a specific function to complete startup,
the management device includes a storage device,
the storage device stores:
   a database storing data in which the startup request time is associated with content of a startup request signal obtained by the management device; and
   topology information of an in-vehicle network, and
the management device is configured to:
   extract, from the database, the startup request time corresponding to the content of the received startup request signal;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 15] The in-vehicle network system according to any one of clauses 1 to 7, where
a startup request time is a preset time required for all of the target devices necessary to implement a specific function to complete startup,
the management device includes a storage device,
the storage device stores:
   a database storing data in which the startup request time is associated with a combination of content of a signal obtained by the management device and a vehicle condition; and
   topology information of an in-vehicle network, and
the management device is configured to:
   extract, from the database, the startup request time corresponding to the combination of the content of the received startup request signal and the vehicle condition;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 16] The in-vehicle network system according to clause 15, where
the management device is configured to receive, when obtaining the startup request signal from another device, information for identifying the other device that transmitted the startup request signal.

[Clause 17] The in-vehicle network system according to any one of clauses 1 to 7, where
a startup request time is a preset time required for all of the target devices necessary to implement a specific function to complete startup,
the management device is configured to receive, when obtaining a startup request signal from another device, information on an event corresponding to a specific function implemented by the target devices,
the management device includes a storage device, and
the storage device stores:
   a database storing data in which the event is associated with the startup request time; and
   topology information of an in-vehicle network, and
the management device is configured to:
   extract, from the database, the startup request time corresponding to the received event;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 18] The in-vehicle network system according to any one of clauses 1 to 7, where
a startup request time is a preset time required for all of the target devices necessary to implement a specific function to complete startup,
the management device is configured to receive, when obtaining the startup request signal from another device, information for identifying the other device that transmitted the startup request signal,
the management device includes a storage device,
the storage device stores:
   a first database storing data in which a combination of a source of a signal received by the management device and a vehicle condition is associated with an event corresponding to a specific function implemented by the target devices;
   a second database storing data in which the event is associated with the startup request time; and
   topology information of an in-vehicle network, and
the management device is configured to:
   extract, from the first database, the event corresponding to the combination of the source of the received signal and the vehicle condition;
   extract, from the second database, the startup request time corresponding to the event;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 19] A management device for starting target devices communicably connected to each other in an in-vehicle network system, where the management device is configured to:
select a startup method for starting at least one target device of the target devices from:
   a first startup method for starting the at least one target device through power control that controls whether to supply power to the at least one target device; and
   a second startup method for starting the at least one target device by requesting, from the management device, startup of the at least one target device via communication; and
start the at least one target device using the selected startup method.

[Clause 20] The management device according to clause 19, further including power control lines including a first power control line that directly connects the management device to the target devices, where
the first power control line directly connects the management device to some of the target devices including the at least one target device, and
the management device is configured to:
   in the first startup method, start all of the at least one target device connected to the first power control line through the power control to request startup via the first power control line, the first power control line directly connecting the management device to the at least one target device; and
   in the second startup method, start only some of the target devices by requesting startup via communication.

[Clause 21] The management device according to clause 19 or 20, where
the management device is configured to select a method for starting the at least one target device from the first startup method and the second startup method upon obtaining a startup request signal.

[Clause 22] The management device according to any one of clauses 19 to 21, where
the management device is configured to select the startup method, from the first startup method and the second startup method, for each of the target devices.

[Clause 23] The management device according to any one of clauses 19 to 22, where
the in-vehicle network system further includes power control lines that directly connect the management device to the target devices,
each of the power control lines is connected to a different combination of the target devices, and
the management device is configured to:
   when the first startup method is selected as the startup method for starting the at least one target device, select, from the power control lines connected to the at least one target device, one power control line that requires the smallest amount of power to start the at least one target device; and
   request startup through the selected power control line.

[Clause 24] The management device according to any one of clauses 19 to 23, where
the in-vehicle network system further includes power control lines that directly connect the management device to the target devices,
each of the power control lines is connected to a different combination of the target devices, and
the management device is configured to:
   when the first startup method is selected as the startup method for starting the target device, select, from the power control lines connected to the at least one target device, one power control line that is connected to the at least one target device and is connected to a relatively small number of target devices; and
   request startup through the selected power control line.

[Clause 25] The management device according to any one of clauses 19 to 24, where
the in-vehicle network system further includes intermediate devices that relay communication from the management device to the target devices, and
the management device is configured to select the second startup method as the startup method when the number of the intermediate devices interposed in a communication path between the management device and the at least one target device is less than or equal to a predetermined number.

[Clause 26] The management device according to clause 25, where
the management device is configured to select the first startup method as the startup method when the number of the intermediate devices interposed in the communication path between the management device and the target devices is greater than the predetermined number.

[Clause 27] The management device according to any one of clauses 19 to 26, including a storage device, where
the storage device stores a database storing data in which the startup method for starting the at least one target device is associated with content of a startup request signal obtained by the management device, and
the management device is configured to refer to the database to select, as the startup method for the at least one target device, the startup method corresponding to the content of the obtained startup request signal.

[Clause 28] The management device according to any one of clauses 19 to 26, including a storage device, where
the storage device stores a database storing data in which a combination of content of a startup request signal obtained by the management device and a vehicle condition is associated with the startup method for starting the at least one target device, and
the management device is configured to refer to the database to select, as the startup method for the at least one target device, the startup method corresponding to the combination of the content of the obtained startup request signal and the vehicle condition.

[Clause 29] The management device according to clause 28, where
the management device is configured to receive, when obtaining the startup request signal from another device, information for identifying the other device that transmitted the startup request signal.

[Clause 30] The management device according to any one of clauses 19 to 26, where
the management device receives, when obtaining a startup request signal from another device, information on an event corresponding to a specific function implemented by the target devices,
the management device includes a storage device,
the storage device stores a database storing data in which the event is associated with the startup method for starting the at least one target device, and
the management device is configured to refer to the database to select, as the startup method for the at least one target device, the startup method corresponding to the received event.

[Clause 31] The management device according to any one of clauses 19 to 26, where
the management device is configured to receive, when obtaining a startup request signal from another device, information for identifying the other device that transmitted the startup request signal,
the management device includes a storage device,
the storage device stores:
   a first database storing data in which a combination of a source of a signal received by the management device and a vehicle condition is associated with an event corresponding to a specific function implemented by the target devices; and
   a second database storing data in which the event is associated with the startup method for starting the at least one target device, and
the management device is configured to:
   extract, from the first database, the event corresponding to the combination of the source of the received signal and the vehicle condition; and
   select, by referring to the second database, the startup method corresponding to the extracted event as the startup method for the at least one target device.

[Clause 32] The management device according to any one of clauses 19 to 25 and clauses 27 to 31, including a storage device, where
the storage device stores data compiling the startup method for each of the target devices determined through the following steps:
a step of calculating a required time, the required time being required to complete startup of the at least one target device when the at least one target device is started using the second startup method;
a step of determining whether the at least one target device is startable using the second startup method within an upper limit startup time by comparing the required time with the upper limit startup time, the upper limit startup time being an upper limit of a time from transmission of a startup request signal by the management device to startup of the at least one target device;
a step of determining to start the at least one target device using the second startup method when determining that the at least one target device is startable using the second startup method by the upper limit startup time; and
a step of determining to start the at least one target device using the first startup method when determining that the at least one target device is not startable using the second startup method by the upper limit startup time.

[Clause 33] The management device according to any one of clauses 19 to 25, where
a startup request time is a preset time required for all of the target devices necessary to implement a specific function to complete startup,
the management device includes a storage device,
the storage device stores:
   a database storing data in which the startup request time is associated with content of a startup request signal obtained by the management device; and
   topology information of an in-vehicle network, and
the management device is configured to:
   extract, from the database, the startup request time corresponding to the content of the received startup request signal;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 34] The management device according to any one of clauses 19 to 25, where
a startup request time is a preset time required for all of the target devices necessary to implement a specific function to complete startup,
the management device includes a storage device,
the storage device stores:
   a database storing data in which the startup request time is associated with a combination of content of a signal obtained by the management device and a vehicle condition; and
   topology information of an in-vehicle network, and
the management device is configured to:
   extract, from the database, the startup request time corresponding to the combination of the content of the received startup request signal and the vehicle condition;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 35] The management device according to clause 34, where
the management device is configured to receive, when obtaining the startup request signal from another device, information for identifying the other device that transmitted the startup request signal.

[Clause 36] The management device according to any one of clauses 19 to 25, where
a startup request time is a preset time required for all of the target devices necessary to implement a specific function to complete startup,
the management device is configured to receive, when obtaining a startup request signal from another device, information on an event corresponding to a specific function implemented by the target devices,
the management device includes a storage device, and
the storage device stores:
   a database storing data in which the event is associated with the startup request time; and
   topology information of an in-vehicle network, and
the management device is configured to:
   extract, from the database, the startup request time corresponding to the received event;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 37] The management device according to any one of clauses 19 to 25, where
a startup request time is a preset time required for all of the target devices necessary to implement a specific function to complete startup,
the management device is configured to receive, when obtaining a startup request signal from another device, information for identifying the other device that transmitted the startup request signal,
the management device includes a storage device,
the storage device stores:
   a first database storing data in which a combination of a source of a signal received by the management device and a vehicle condition is associated with an event corresponding to a specific function implemented by the target devices;
   a second database storing data in which the event is associated with the startup request time; and
   topology information of an in-vehicle network, and
the management device is configured to:
   extract, from the first database, the event corresponding to the combination of the source of the received signal and the vehicle condition;
   extract, from the second database, the startup request time corresponding to the event;
   calculate a required time based on a position of the at least one target device relative to the management device in the in-vehicle network, the required time being required to start the at least one target device using the second startup method; and
   select the first startup method to start the at least one target device when the required time is longer than the extracted startup request time and select the second startup method to start the at least one target device when the required time is less than or equal to the extracted startup request time.

[Clause 38] A data producing method for producing data to be referred to by a management device when selecting which startup method to use, where
an in-vehicle network system includes the management device and target devices communicably connected to the management device and started by the management device,
the management device selects the startup method for starting at least one target device of the target devices from:
   a first startup method for starting the target device through a power control line that controls whether to supply power to the target device; and
   a second startup method for starting the target device by requesting, from the management device, startup of the at least one target device via communication,
the data producing method includes:
   a step of calculating a required time, the required time being required to complete startup of the at least one target device when the at least one target device is started using the second startup method;
   a step of determining whether the at least one target device is startable using the second startup method within an upper limit startup time by comparing the required time with the upper limit startup time, the upper limit startup time being an upper limit of a time from transmission of a startup request signal by the management device to startup of the at least one target device;
   a step of determining to start the at least one target device using the second startup method when determining that the target device is startable using the second startup method by the upper limit startup time; and
   a step of determining to start the at least one target device using the first startup method when determining that the at least one target device is not startable using the second startup method by the upper limit startup time, and
data compiling the determined startup method for the target devices is produced.

## Claims

1. An in-vehicle network system, comprising:
a management device; and
target devices communicably connected to the management device and started by the management device, wherein
the management device is configured to:
select a startup method for starting at least one target device of the target devices from:
a first startup method for starting the at least one target device through power control that controls whether to supply power to the at least one target device; and
a second startup method for starting the at least one target device by requesting, from the management device, startup of the at least one target device via communication; and
start the at least one target device using the selected startup method.

2. The in-vehicle network system according to claim 1, comprising power control lines including a first power control line that directly connects the management device to the target devices, wherein
the first power control line directly connects the management device to some of the target devices including the at least one target device, and
the management device is configured to:
in the first startup method, start all of the target devices connected to the first power control line through the power control to request startup via the first power control line, the first power control line directly connecting the management device to the at least one target device; and
in the second startup method, start only some of the target devices by requesting startup via communication.

3. The in-vehicle network system according to claim 1, wherein
the management device is configured to select a method for starting the at least one target device from the first startup method and the second startup method upon obtaining a startup request signal.

4. The in-vehicle network system according to claim 1, wherein
the management device is configured to select the startup method, from the first startup method and the second startup method, for each of the target devices.

5. The in-vehicle network system according to claim 1, further comprising power control lines that directly connect the management device to the target devices, wherein
each of the power control lines is connected to a different combination of the target devices, and
the management device is configured to:
when the first startup method is selected as the startup method for starting the at least one target device, select, from the power control lines connected to the at least one target device, one power control line that requires the smallest amount of power to start the at least one target device; and
request startup through the selected power control line.

6. The in-vehicle network system according to claim 1, further comprising power control lines that directly connect the management device to the target devices, wherein
each of the power control lines is connected to a different combination of the target devices, and
the management device is configured to:
when the first startup method is selected as the startup method for starting the at least one target device, select, from the power control lines connected to the at least one target device, one power control line that is connected to the at least one target device and is connected to a relatively small number of target devices; and
request startup through the selected power control line.

7. The in-vehicle network system according to claim 1, further comprising intermediate devices that relay communication from the management device to the target devices, wherein
the management device is configured to select the second startup method as the startup method when the number of the intermediate devices interposed in a communication path between the management device and the at least one target device is less than or equal to a predetermined number.

8. The in-vehicle network system according to claim 7, wherein
the management device is configured to select the first startup method as the startup method when the number of the intermediate devices interposed in the communication path between the management device and the at least one target device is greater than the predetermined number.

9. The in-vehicle network system according to any one of claims 1 to 8, wherein
the management device includes a storage device,
the storage device stores a database storing data in which the startup method for starting the at least one target device is associated with content of a startup request signal obtained by the management device, and
the management device is configured to refer to the database to select, as the startup method for the at least one target device, the startup method corresponding to the content of the obtained startup request signal.

10. The in-vehicle network system according to any one of claims 1 to 8, wherein
the management device includes a storage device,
the storage device stores a database storing data in which a combination of content of a startup request signal obtained by the management device and a vehicle condition is associated with the startup method for starting the at least one target device, and
the management device is configured to refer to the database to select, as the startup method for the at least one target device, the startup method corresponding to the combination of the content of the obtained startup request signal and the vehicle condition.

11. The in-vehicle network system according to claim 10, wherein
the management device is configured to receive, when obtaining the startup request signal from another device, information for identifying the other device that transmitted the startup request signal.

12. The in-vehicle network system according to any one of claims 1 to 8, wherein
the management device is configured to receive, when obtaining a startup request signal from another device, information on an event corresponding to a specific function implemented by the target devices,
the management device includes a storage device,
the storage device stores a database storing data in which the event is associated with the startup method for starting the at least one target device, and
the management device is configured to refer to the database to select, as the startup method for the at least one target device, the startup method corresponding to the received event.

13. The in-vehicle network system according to any one of claims 1 to 8, wherein
the management device is configured to receive, when obtaining a startup request signal from another device, information for identifying the other device that transmitted the startup request signal,
the management device includes a storage device,
the storage device stores:
a first database storing data in which a combination of a source of a signal received by the management device and a vehicle condition is associated with an event corresponding to a specific function implemented by the target devices; and
a second database storing data in which the event is associated with the startup method for starting the at least one target device, and
the management device is configured to:
extract, from the first database, the event corresponding to the combination of the source of the received signal and the vehicle condition; and
select, by referring to the second database, the startup method corresponding to the extracted event as the startup method for the at least one target device.

14. The in-vehicle network system according to any one of claims 1 to 7, wherein
a startup request time is a preset time required for all of the target devices necessary to implement a specific function to complete startup,
the management device includes a storage device,
the storage device stores:
a database storing data in which the startup request time is associated with content of a startup request signal obtained by the management device; and
topology information of an in-vehicle network, and
the management device is configured to:
extract, from the database, the startup request time corresponding to the content of the received startup request signal;
calculate a required time based on a position of the at least one target device relative to the management device in the in-vehicle network, the required time being required to start the at least one target device using the second startup method; and
select the first startup method to start the at least one target device when the required time is longer than the extracted startup request time and select the second startup method to start the at least one target device when the required time is less than or equal to the extracted startup request time.

15. The in-vehicle network system according to any one of claims 1 to 7, wherein
a startup request time is a preset time required for all of the target devices necessary to implement a specific function to complete startup,
the management device includes a storage device,
the storage device stores:
a database storing data in which the startup request time is associated with a combination of content of a signal obtained by the management device and a vehicle condition; and
topology information of an in-vehicle network, and
the management device is configured to:
extract, from the database, the startup request time corresponding to the combination of the content of the received startup request signal and the vehicle condition;
calculate a required time based on a position of the at least one target device relative to the management device in the in-vehicle network, the required time being required to start the at least one target device using the second startup method; and
select the first startup method to start the at least one target device when the required time is longer than the extracted startup request time and select the second startup method to start the at least one target device when the required time is less than or equal to the extracted startup request time.

16. The in-vehicle network system according to claim 15, wherein
the management device is configured to receive, when obtaining the startup request signal from another device, information for identifying the other device that transmitted the startup request signal.

17. The in-vehicle network system according to any one of claims 1 to 7, wherein
a startup request time is a preset time required for all of the target devices necessary to implement a specific function to complete startup,
the management device is configured to receive, when obtaining a startup request signal from another device, information on an event corresponding to a specific function implemented by the target devices,
the management device includes a storage device, and
the storage device stores:
a database storing data in which the event is associated with the startup request time; and
topology information of an in-vehicle network, and
the management device is configured to:
extract, from the database, the startup request time corresponding to the received event;
calculate a required time based on a position of the at least one target device relative to the management device in the in-vehicle network, the required time being required to start the at least one target device using the second startup method; and
select the first startup method to start the at least one target device when the required time is longer than the extracted startup request time and select the second startup method to start the at least one target device when the required time is less than or equal to the extracted startup request time.

18. The in-vehicle network system according to any one of claims 1 to 7, wherein
a startup request time is a preset time required for all of the target devices necessary to implement a specific function to complete startup,
the management device is configured to receive, when obtaining a startup request signal from another device, information for identifying the other device that transmitted the startup request signal,
the management device includes a storage device,
the storage device stores:
a first database storing data in which a combination of a source of a signal received by the management device and a vehicle condition is associated with an event corresponding to a specific function implemented by the target devices;
a second database storing data in which the event is associated with the startup request time; and
topology information of an in-vehicle network, and
the management device is configured to:
extract, from the first database, the event corresponding to the combination of the source of the received signal and the vehicle condition;
extract, from the second database, the startup request time corresponding to the event;
calculate a required time based on a position of the at least one target device relative to the management device in the in-vehicle network, the required time being required to start the at least one target device using the second startup method; and
select the first startup method to start the at least one target device when the required time is longer than the extracted startup request time and select the second startup method to start the at least one target device when the required time is less than or equal to the extracted startup request time.

19. A management device for starting target devices communicably connected to each other, wherein the management device is configured to:
select a startup method for starting at least one target device of the target devices from:
a first startup method for starting the at least one target device through power control that controls whether to supply power to the at least one target device; and
a second startup method for starting the at least one target device by requesting, from the management device, startup of the at least one target device via communication; and
start the at least one target device using the selected startup method.

20. The management device according to claim 19, comprising a storage device, wherein
the storage device stores data compiling the startup method for each of the target devices determined through the following steps:
a step of calculating a required time, the required time being required to complete startup of the at least one target device when the at least one target device is started using the second startup method;
a step of determining whether the at least one target device is startable using the second startup method within an upper limit startup time by comparing the required time with the upper limit startup time, the upper limit startup time being an upper limit of a time from transmission of a startup request signal by the management device to startup of the at least one target device;
a step of determining to start the at least one target device using the second startup method when determining that the at least one target device is startable using the second startup method by the upper limit startup time; and
a step of determining to start the at least one target device using the first startup method when determining that the at least one target device is not startable using the second startup method by the upper limit startup time.

21. A non-transitory computer-readable storage medium storing a target device startup program in an in-vehicle network system, the in-vehicle network system including a management device and target devices communicably connected to the management device and started by the management device, wherein
the startup program causes the management device to:
select a startup method for starting at least one target device of the target devices from:
a first startup method for starting the at least one target device through power control that controls whether to supply power to the at least one target device; and
a second startup method for starting the at least one target device by requesting, from the management device, startup of the at least one target device via communication; and
start the at least one target device using the selected startup method.

22. A target device startup method for an in-vehicle network system, the in-vehicle network system including a management device and target devices communicably connected to the management device and started by the management device, the target device startup method comprising:
a first step of selecting, by the management device, a startup method for starting at least one target device of the target devices from:
a first startup method for starting the at least one target device through power control that controls whether to supply power to the at least one target device; and
a second startup method for starting the at least one target device by requesting, from the management device, startup of the at least one target device via communication; and
a second step of starting, by the management device, the at least one target device using the startup method selected in the first step.
